# EUROPEAN PATENT SPECIFICATION

(11) **EP 4 087 178 B1**
(45) Date of publication and mention of the grant of the patent: **14.10.2026**
(21) Application number: 22169050.6
(22) Date of filing: 16.02.2017
(51) Int. Cl.: H04L 9/00, H04L 9/08, H04L 9/32, G06Q 20/38

(54) **A METHOD AND SYSTEM FOR THE SECURE TRANSFER OF ENTITIES ON A BLOCKCHAIN**
VERFAHREN UND SYSTEM ZUM SICHEREN TRANSFER VON ENTITÄTEN AUF EINER BLOCKCHAIN
PROCÉDÉ ET SYSTÈME DE TRANSFERT SÉCURISÉ D'ENTITÉS SUR UN ENCHAÎNEMENT DE BLOCS

(30) Priority: 23.02.2016 GB 201603123; 23.02.2016 GB 201603125; 22.04.2016 GB 201607063
(43) Date of publication of application: 09.11.2022
(62) Document number(s) of the earlier application(s) in accordance with Art. 76 EPC: 17709485.1 / 3 420 517
(73) Proprietor: nChain Licensing AG, 6300 Zug (CH)
(72) Inventor: WRIGHT, Craig Steven, Cardiff, CF10 2HH (GB); SAVANAH, Stephane, Cardiff, CF10 2HH (GB)
(74) Representative: Gill Jennings & Every LLP

(56) References cited:
- US-A1- 2015 363 773
- ANONYMOUS: "Developer Guide - Bitcoin", 11 May 2015 (2015-05-11), pages 1 - 48, XP055519712, Retrieved from the Internet <URL:https://web.archive.org/web/20150511232019/https://bitcoin.org/en/developer-guide> [retrieved on 20181029]
- ANDREAS M ANTONOPOULOS: "Mastering Bitcoin - Unlocking Digital Crypto-Currencies", O'REILLY, 1 December 2014 (2014-12-01), pages 1 - 282, XP055581333, Retrieved from the Internet <URL:https://unglueit-files.s3.amazonaws.com/ebf/05db7df4f31840f0a873d6ea14dcc28d.pdf> [retrieved on 20190416]
- JOSEPH POON ET AL: "The Bitcoin Lightning Network: Scalable Off-Chain Instant Payments", 14 January 2016 (2016-01-14), XP055358006, Retrieved from the Internet <URL:https://lightning.network/lightning-network-paper.pdf> [retrieved on 20170323]

## Description

### Technical Field

The present invention relates to distributed, peer-to-peer ledgers and, in particular, blockchain technologies. The invention also relates in part to tokenisation and security techniques, and secure mechanisms for transferring entities and/or ownership of entities via a blockchain. It may comprise a method of performing secure transactions between different parties over a blockchain.

### Background & Introduction To The Technical Area

A blockchain is a peer-to-peer, electronic ledger which is implemented as a computer-based decentralised, distributed system made up of blocks which in turn are made up of transactions. Each transaction is a data structure that encodes the transfer of control of a digital asset between participants in the blockchain system, and includes at least one input and at least one output. Each block contains a hash of the previous block to that blocks become chained together to create a permanent, unalterable record of all transactions which have been written to the blockchain since its inception. Transactions contain small programs known as scripts embedded into their inputs and outputs, which specify how and by whom the outputs of the transactions can be accessed. On the Bitcoin platform, these scripts are written using a stack-based scripting language.

In order for a transaction to be written to the blockchain, it must be "validated". Network nodes (miners) perform work to ensure that each transaction is valid, with invalid transactions rejected from the network. Software clients installed on the nodes perform this validation work on an unspent transaction (UTXO) by executing its locking and unlocking scripts. If execution of the locking and unlocking scripts evaluate to TRUE, the transaction is valid and the transaction is written to the blockchain. Thus, in order for a transaction to be written to the blockchain, it must be i) validated by the first node that receives the transaction - if the transaction is validated, the node relays it to the other nodes in the network; and ii) added to a new block built by a miner; and iii) mined, i.e. added to the public ledger of past transactions.

Although blockchain technology is most widely known for the use of cryptocurrency implementation, digital entrepreneurs have begun exploring the use of both the cryptographic security system Bitcoin is based on and the data that can be stored on the Blockchain to implement new systems. It would be highly advantageous if the blockchain could be used for automated tasks and processes which are not limited to the realm of cryptocurrency. Such solutions would be able to harness the benefits of the blockchain (e.g. a permanent, tamper proof records of events, distributed processing etc) while being more versatile in their applications.

One area of current research is the use of the blockchain for the implementation of "smart contracts". These are computer programs designed to automate the execution of the terms of a machine-readable contract or agreement. Unlike a traditional contract which would be written in natural language, a smart contract is a machine executable program which comprises rules that can process inputs in order to produce results, which can then cause actions to be performed dependent upon those results.

Another area of blockchain-related interest is the use of 'tokens' (or 'coloured coins') to represent and transfer real-world entities via the blockchain. A potentially sensitive or secret item can be represented by the token which has no discernable meaning or value. The token thus serves as an identifier that allows the real-world item to be referenced from the blockchain. Tokenisation techniques can be used in respect of many different types of contexts where security, anonymity and cross-platform compliance are important. One such application area is financial applications, although the present invention is not limited to use in relation to financial transactions.

In this document we use the term 'blockchain' to include all forms of electronic, computer-based, distributed ledgers. These include, but are not limited to consensus-based blockchain and transaction-chain technologies, permissioned and un-permissioned ledgers, shared ledgers and variations thereof. The most widely known application of blockchain technology is the Bitcoin ledger, although other blockchain implementations have been proposed and developed. While Bitcoin may be referred to herein for the purpose of convenience and illustration, it should be noted that the invention is not limited to use with the Bitcoin blockchain and alternative blockchain implementations and protocols fall within the scope of the present invention.
Anonymous: "Developer Guide - Bitcoin", 11 May 2015, pages 1-48, Retrieved from the internet: URL: https://web.artchive.org/web/20150511232019/https://bitcoin.org/en/developer-guide [retrieved on 2018-10-29] discloses implementation of transactions on a blockchain using P2SH (Pay to script hash) scripts.
Andreas M. Antonopoulos: "Mastering Bitcoin - Unlocking Digital CryptoCurrencies", O'Reilly, 1 December 2014, pages 1-282, Retrieved from the Internet: URL: https://unglueit-files.s3.amazonaws.com/ebf/05db7df4f31840f0a873d6ea14dec28d.pdf [retrieved on 2019-04-16] also discloses P2SH scripts.
Joseph POON et al: "The Bitcoin Lightning Network: Scalable Off-Chain Instant Payments", 14 January 2016 (2016-01-14), XP055358006 discloses a decentralised system whereby transactions are sent over a network of micropayment channels whose transfer of value occurs off-blockchain. Micropayment channels permit deferral of a transaction state to be broadcast at a later time. The contracts are enforced by creating a responsibility for one party to broadcast transactions before or after certain dates.
US 2015/0363773 A1 discloses a cryptocurrency aggregation system.

### Summary

The invention is defined in the appended claims.

The present invention may provide solutions for the secure control and/or transfer or exchange of an asset via a blockchain. Herein, the term "entity" may be used interchangeably with "asset". Additionally or alternatively, the invention may enable control and/or transfer of ownership of the asset. This may be a digital or virtual asset such as a smart contract, or a real-world/physical asset. The asset may be a right such as a licence or right to use or some sort of right relating to some type of property. The invention may use tokenisation techniques to facilitate this control or transfer. The invention may enable the transfer/exchange to be performed in a secure manner, incorporating the use of cryptographic keys, while not requiring any alteration of the underlying blockchain protocol. The invention may use techniques for embedding metadata in a script associated with a blockchain transaction (Tx).

The invention provides, not least: enhanced optimisation of memory usage for electronic transfers, improved security and data integrity through the use of hashing techniques, improved security through the removal of a need for a trusted third party, and enhanced anonymity of data. It may also provide improved communication mechanisms to enable disparate or distinct parties to identify each other and/or exchange data via the novel methods and/or architectures provided by the invention. This list of advantages is not limiting or exhaustive.

The invention may require the interaction and inter-communication of various distinct and separate computer-based resources, such as one or more user devices and a distributed computer system (blockchain) which includes computing nodes arranged to execute blockchain-related software and protocols.

According to a first aspect, the invention provides a computer implemented method of offering an exchange of an entity, the method comprising the features of clam 1.
The first script may comprise a first third-party public key (P1T) associated with a first third-party, wherein the first third-party public key (P1T) is part of an asymmetric cryptographic pair comprising the first third-party public key (P1T) and a first third-party private key (V1T).

The first script may be a script associated with a blockchain transaction (Tx). It may be a redeem script.

The method may further comprise generating a first invitation transaction (Tx) for inclusion on a peer-to-peer (P2P) distributed ledger (i.e. blockchain), the first invitation transaction comprising an indication of a second entity to be transferred in exchange for the first entity, and the first script hash.

The P2P distributed ledger may be the Bitcoin block chain. However, it will be appreciated that any other suitable P2P distributed ledger is envisaged.

Thus, the hash of the (redeem) script may be provided within, or associated with, a blockchain transaction (Tx). This may be a P2SH transaction in accordance with the Bitcoin protocol, or another functionally equivalent transaction type in another blockchain protocol. The hash of the script may serve as a look-up key to a hash table or other storage resource. This storage resource may be a public domain repository of invitations. The storage resource may comprise the look-up key (ie the hash) and all the fields from the metadata which, in combination, define the invitation. The look-up key may be a hash of the rest of the record i.e. a hash of the concatenated metadata values. In a preferred embodiment, the metadata may comprise a pointer or other reference to the location of a contract associated with a token. The contract may be stored in a separate storage resource. The invitation (as defined by the metadata in the storage resource) may be linked to the blockchain transaction via the hash.

A number of advantages are provided by the invention, some of which are now described. Firstly, because information regarding the exchange is included in metadata securely embedded in a distributed ledger, the exchange can be carried out securely on a peer-to-peer basis, thereby making a trusted third party unnecessary. This in turn avoids the need for a large amount of sensitive information about both parties to the exchange to be held by any third party such as a service provider, which in turn avoids the risks associated with that third party's security being compromised. This advantage is provided while also preserving anonymity of the transactions. Since the first script is hashed, it would be impracticably difficult to change the values of the metadata without causing a change in the corresponding hash values of the script. This also enables the terms of the transaction to be verified by the parties, since they are locked on a publicly available distributed ledger, which enables the integrity of the transactions to be trusted. The advantage is also provided that the first metadata can be embedded in one or more of the places available for public keys in the first script, thereby enabling nodes not suitable for processing the metadata to simply transmit the script to a further node, as opposed to blocking its progress. This in turn improves computational efficiency of the related transactions. A further advantage is provided that control data can be incorporated into the metadata, for example an access code for a barrier in the case of a token representing a ticket for a venue or a travel ticket or voucher. The metadata may also contain a pointed to an off-block repository of the details of the exchange, thereby enabling less memory and/or processing resources to be used in processing the related transactions. A yet further advantage is provided that the token can be divided, enabling two or more transaction outputs, each of which can relate to tokenised or untokenised electronically transferrable digital asset.

The first entity that is offered for exchange and/or the second entity to be transferred in exchange for the first entity may comprise one or more of the following:
a) a cryptocurrency;
b) a contract;
c) goods;
d) services.

The contract may be related, at least in part, to one or more of the following:
a) a fiat currency;
b) title deeds;
c) goods;
d) services.

The first location condition may further comprise one or more of the following:
a) location format information indicative of a format of the location information;
b) range information indicative of a range limit on the geographical location or area relating to the exchange; and
c) range format information indicative of a format of the range information.

The method may comprise a step of:
matching the first invitation of the first script to a second script that is published on the DHT by comparing at least the first entity specified in the first script with a second entity specified in the second script,
wherein the second script comprises a second set of metadata associated with a second invitation for an exchange of a second entity by a second user, the second set of metadata comprising an indication of the second entity to be offered in exchange for the first entity,
   a second user public key (P2A) associated with the second user, wherein the second user public key (P2A) is part of an asymmetric cryptographic pair comprising the second user public key (P2A) and a second user private key (V2A), and
   a second third-party public key (P2T) associated with a second third-party, wherein the second third-party public key (P2T) is part of an asymmetric cryptographic pair comprising the second third-party public key (P2T) and a second third-party private key (V2T).

The second third party may be the same as the first third party.

The method may further comprise a step of publishing the second script on the DHT, comprising:
generating the second script:
hashing the second script to generate a second script hash; and
publishing the second script and the second script hash on the DHT.

The method may comprise a step of generating a second transaction invitation for inclusion on the P2P distributed ledger, the second invitation transaction comprising an indication of the first entity to be transferred in exchange for the second entity; and the second script hash.

In one example, the method may further comprise:
generating the first exchange transaction for inclusion on the P2P distributed ledger, the first exchange transaction comprising:
the first script,
the first user public key (P1A),
the first third-party public key (P1T),
a first input provided from an output of the first invitation transaction, and
a first output indicating a first quantity of the first entity to be transferred to the second user.

Further, the method may comprise:
generating a second exchange transaction for inclusion on the P2P distributed ledger, the second exchange transaction comprising:
   the second script,
   the second user public key (P2A),
   the second third-party public key (P2T),
   a second input provided from an output of the second invitation transaction, and
   a second output indicating a second quantity of a second entity to be transferred to the first user; and
recording the second exchange transaction on the P2P distributed ledger.

Alternatively, the method may comprise:
generating the first exchange transaction for inclusion on the P2P distributed ledger, the first exchange transaction comprising:
the first script,
the first user public key (P1A),
the first third-party public key (P1T),
the second script,
the second user public key (P2A),
the second third-party public key (P2T)
a first input provided from an output of the first invitation transaction,
a second input provided from an output of the second invitation transaction,
a first output indicating a first quantity of a first entity to be transferred to the second user, and
a second output indicating a second quantity of a second entity to be transferred to the first user.

The step of generating the first exchange transaction may comprise facilitating signing of the first script with the first user private key (V1A); and facilitating signing of the first script with the first third-party private key (P1T).

Similarly, the step of generating the second exchange transaction may comprise facilitating signing of the second script with the second user private key (V1A); and facilitating signing of the second script the second third-party private key (P2T).

The method may further comprise facilitating one or more of the first and second users to accept the exchange before generating or recording the first and/or second exchange transactions.

One or more of the first exchange transaction, and the second transaction may be a pay-to-script-hash (P2SH) transaction.

In accordance with another aspect of the present disclosure, there is provided a computer system for offering an exchange of an entity, the computer system comprising the feature of claim 18.
The script may also comprise a first third-party public key (P1T) associated with a first third-party, wherein the first third-party public key (P1T) is part of an asymmetric cryptographic pair comprising the first third-party public key (P1T) and a first third-party private key (V1T);

Embodiments of the present disclosure further relate to a processor or group of processors operable to perform the above described method.

Embodiments of the present disclosure also relate to a computer readable medium having stored thereon instructions which, when executed, are operable to perform the above described method.

Embodiment(s) of the invention may comprise a technique for embedding metadata in a (blockchain) transaction, comprising the steps of:
generating a blockchain transaction (Tx) having an output (TxO) related to an asset (B1) and a hash of a redeem script which comprises:
metadata comprising a token which is a representation of, or a reference to, a tokenised entity;
   and
at least one (preferably two or more) public cryptographic keys.
The digital asset (B1) may be a quantity of cryptocurrency eg Bitcoin. The redeem script may be provided within a locking script of the transaction output TxO. The metadata may be provided in the redeem script at a location which is designated in a blockchain protocol as a location for a cryptographic key. This provides the advantage that the metadata can be transferred without the need for any alteration to the underlying blockchain protocol. Nodes operating the protocol will be agnostic to the use of the metadata in place of the cryptographic key.
The method may further include the step of submitting the transaction Tx to a blockchain. In effect, the cryptocurrency (B 1) may thus be locked on the blockchain in association with the token. The quantity of cryptocurrency (B 1) can only be spent (redeemed) upon provision of an unlocking script which meets the requirements of the locking script for the output TxO. In particular, a redeem script must be presented which, when hashed, matches the hash provided in the locking script of TxO. As the locking script for output TxO comprises the hash of the redeem script which in turn includes the token (in the metadata), the cryptocurrency (B 1) is associated with the token. Upon presentation of the correct unlocking (redeem) script, ownership of the cryptocurrency (B 1) may be transferred to the redeeming party or user i.e. it is spent.

Any feature(s) mentioned above in relation to one aspect or embodiment may be used in relation to any other embodiment or aspect. Any feature mentioned in relation to a method of the invention may apply equally to a corresponding, implanting system and vice versa.

### Brief Description of Drawings

Embodiments of the present disclosure will now be described, by non-limiting example only, with reference to the accompanying drawings, in which:
Figure 1 is a schematic diagram of a system according to an embodiment of the present disclosure;
Figure 2 is a flow diagram of a process performed by a user of the system of Figure 1;
Figure 3 is a flow diagram illustrating a process performed by an exchange service provider;
Figure 4 is a table illustrating a metadata format for an invitation generated by an exchange service provider;
Figure 5 is a table illustrating a metadata format for an invitation generated by an exchange service provider;
Figure 6 is a flow diagram illustrating a process of matching invitations from two or more users of the system of Figure 1;
Figure 7 is a transaction table for a plurality of transactions between a plurality of parties to the system of Figure 1;
Figure 8 is a transaction diagram illustrating transactions between parties to the system of Figure 1;
Figure 9 is a transaction table for a plurality of transactions between a plurality of parties to the system of Figure 1;
Figure 10 is a transaction table for a plurality of transactions between a plurality of parties to the system of Figure 1;
Figure **11** is a flow diagram illustrating a process performed by an exchange service provider;
Figures 12 to 15 show tables illustrating metadata formats for an invitation generated by an exchange service provider;
Figure 16A is a transaction table for a transaction between two parties to the system of Figure 1;
Figure 16B is a transaction table for a transaction between two parties to the system of Figure 1; and
Figure 16C is a transaction table for a transaction between two parties to the system of Figure 1.

### Description of Embodiments

State of the art methods of performing common financial transactions, such as a payment into another person's bank account or a foreign currency exchange, incur cost in both transaction fees and time delay. In contrast, transactions in electronic currencies such as bitcoin can be processed at a much faster rate (i.e. minutes rather than days) and for far less cost (in the order of a few cents per transaction rather than tens of dollars).

There exists a need for a quicker and cheaper way of performing and keeping a permanent record of day-to-day transactions, both financial and non-financial. It is important to note, that the invention is not limited to use with, or advantages for, financial applications. Instead, the present disclosure generally relates to a computer implemented method and a computer system for utilising a P2P distributed ledger, such as the Bitcoin blockchain, to enable parties to offer an exchange of an entity and record the exchange of the entity which may be any type of entity of value. Exemplary methods described herein relate to the generation of a script indicative of an invitation or offer to perform an exchange of an entity. Further methods described herein relate to the enactment of the actual exchange of the entity upon matching the script to another script.

By utilising the P2P distributed ledger, such as the Bitcoin blockchain, embodiments of the present disclosure provide for a permanent record of all steps of an exchange process to be maintained. Further, each stage in the process (offer and exchange) can be secured using cryptographic locking techniques similar to those used in transactions of cryptocurrencies. By "cryptocurrency" is meant an encrypted, electronically transferrable digital asset such as, but not limited to, Bitcoin.

The exemplary methods described herein can be used to offer and exchange any type of entity. Examples of such entities include but are not limited to cryptocurrency, such as Bitcoins, fiat currencies, contracts, goods and services.
Exchanges such as Coinffeine (http://www.coinffeine.com/) which involve the use of blockchain technologies are known in the art. However, such prior art arrangements still rely on traditional models, and also rely on third-party sources, escrows, and other multi-currency non-bank accounts/processors in order to operate. These known arrangements achieve their decentralisation through their business models, rather than through technical innovations and cryptographic techniques (as per the present invention).
The present invention incorporates the use of tokenisation techniques. Contracts may be offered for exchange or exchanged by virtue of tokens.

**In** summary, a token is an exchangeable entity represented by/representative of a contract. The contract may take one of several forms. For example, the contract may confer a right upon the holder or denote ownership of property. The value of the token may be contractually specified and is linked to the underlying BTC amount via a 'pegging rate'. The token is exchangeable via a transaction using a cryptocurrency protocol such as the Bitcoin protocol. The Bitcoin value on the transaction acts as a token representing a rights contract in digital form. The contract itself may be stored on the transaction or may be kept in a publicly accessible location, or may be held privately by the parties to the contract depending on the particular embodiment. Where the contract is not stored on the transaction, the transaction may store a unique pointer to the contract.

Tokens may be divisible. A divisible token is one in which the value on the transaction output can be subdivided into smaller amounts which can be allocated across multiple new tokens. Examples of divisible tokens include tokens for fiat currency or for shares in a race horse. Divisible contracts may be defined as those that specify a non-zero pegging rate. In other words, the token value is tied to the underlying bitcoin value. Alternatively, tokens may be non-divisible. A non-divisible token is a contract that specifies the holder's rights in terms of a fixed value, e.g. a contract to redeem a house or £1,000. Non-divisible tokens are therefore not linked to the value of the underlying Bitcoin.

Tokens must be digitally signed by a token issuer to be valid. The issuer may, for example, be an authority such as a Registrar of Title deeds. The issuer may issue a token to a user in return for payment. That token may then give the user the right to exercise the contract linked to the token, whether the contract represents the right to redeem fiat currency or for a service to be performed.

Examples of tokens in accordance with the above, include the following:
- A fiat currency token that is pegged to the BTC value of the transaction output by the issuer of the contract. For example "the spender of this token (bitcoin transaction) is entitled to redeem any fraction of this token for Canadian dollars (CAD) at a rate of 1 share (10cents) for every 1000 satoshis".
- A race horse owned by several members of a syndicate.
- Any item where the ownership is by a title deed, e.g., a house or other property could be treated in this way.
- An electronic contract representing a concert ticket. This is inherently non-divisible.
- A bearer bond (non-divisible)
- A unique identifier attached to a goods/service (such as a bar code or RFID). If used, this identifier is still preferably validated by a signature of an authorised entity; without a signature it will fall into the less secure 'goods/service' category (described below).
- A contract for the right to a service to be performed. It is noted that this is not the same as the actual service itself, but only the right to have the service performed. This right can be traded. For example, a voucher from Michael's Mowing for up to 3 hours lawn mowing within the Sydney metropolitan area. The holder of this voucher (contract) can redeem it for the actual service.

Tokens must specify the value of a share, e.g., 1 share = 10 cents CAD, 1 share = 1 rupiah, or 1 share = 1% ownership of an item or property (race horse, house, etc.).

Whilst embodiments described below may refer specifically to recording transactions on the Bitcoin blockchain, it will be understood that the present disclosure may be implemented using any P2P distributed ledger. The blockchain is used below to describe examples of the present disclosure for simplicity only due to its high level of standardisation and large quantity of associated public documentation.

As is well known in the art, the Bitcoin blockchain is a transaction ledger or database which is distributed across networked nodes participating in a system based on the Bitcoin protocol. A full copy of a currency's block chain contains every transaction ever executed in the currency. Thus, a continuously growing list of transactional data records is provided. Since each transaction entered onto the block chain is cryptographically enforced, the Bitcoin blockchain is hardened against tampering and revision, even by operators of the data store nodes.

In embodiments of the present disclosure, instead of or in addition to being used in its designed function of storing a record of transactions representing payments of Bitcoins (or other cryptocurrency) from one party to another, the blockchain is used in a novel manner to enable a transfer of entities or assets between parties. The exchange transfers control and/or ownership of the digital entity from one party to another. In order to achieve this, the invention provides a mechanism for holding and recording invitations (or orders) to perform an exchange of one or more entities. The invention thus provides a novel and advantageous communication solution which is conducted via the blockchain.

As mentioned above, any type of entity or asset is exchangeable. These may be physical, "real world" entities, or virtual, digital entities. Examples of entities which may be exchanged include cryptocurrencies such as Bitcoins, tokens (representing any type of transferrable contract), and goods and services of any type. Tokens may represent a contract conferring specified rights upon the holder to be redeemed for fiat currency (virtual banknotes), to denote ownership of property (e.g., title deeds), or grant access to an event (tickets), to name a few of many examples. Goods and services may include new or second hand products, labour (e.g., charged by the hour), complete jobs (e.g., mowing the lawn), to name a few of many examples.

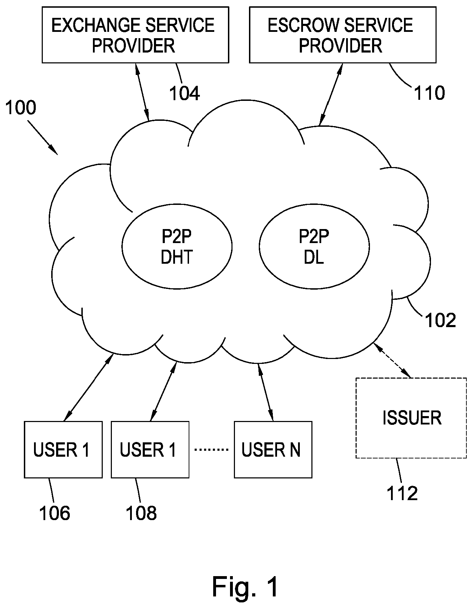

Figure 1 is a network diagram of a P2P exchange system 100 according to one embodiment. The system 100 comprises a network 102 and a plurality of parties to the network. The parties include an exchange service provider 104, a first user 106, a second user 108, an escrow service provider 110, and an issuer 112. As will be described in more detail below, a combination of functions of the exchange service provider 104, the escrow service provider 110 and the issuer 112, may be undertaken by a single party. In other words, a single party could simultaneously perform the functions of each. In addition, and as will be explained in more detail below, the exchange service provided 104 and escrow service provider 110 are optional, since the invention can be carried out entirely on the P2P exchange system without the use of those service providers 104, 110.

The exchange service provider 104 provides exchange services to a plurality of users, including the first user 106 and the second user 108. The issuer 112 is optional to the network 102, as denoted by broken lines. As will be discussed in more detail below, the issuer 112 may only be required when an exchange of tokens is required.

In some embodiments, the network 102 is the Internet. Accordingly, other parties (not shown) may be party to the network 102. All parties to the network 102 are able to communicate with all other parties to the network 102. Hosted on the network 102 are a peer-to-peer distributed hash table (P2P DHT) and a peer-to-peer distributed ledger (P2P DL). It will be appreciated that some or all of the parties shown in the system 100, together with those not shown, may act as host nodes to both or either of the P2P DHT and the P2P DL.

### Structure of An Invitation

An invitation may be structured include various parameters or codes. These can be used for various purposes, eg matching invitations as described in more detail below. In one or more embodiments, the following structure may be used:

| Offer-type-code | |
|---|---|
| Offer-QTY-max | This is the amount of value e.g BTC that will be carried on the offerer's payment transaction. |
| | If the offerer is offering BTC than this value is simply the offerer's maximum BTC offer. |
| | If the offerer is offering tokenised currency then this value is the equivalent token value of the offerer's maximum offered currency amount (calculated based on the pegging rate specified on the tokenisation contract). The same is true if the offeror is offering a tokenised other commodity such as part ownership of a racehorse (the contract will still have a pegging rate that specifies the BTC token value for shares in the horse). |
| | If the offeror is offering a physical item then this field is ignored - but the actual bitcoin transaction will carry the minimum required amount (i.e. dust = 546 satoshis). |
| | Of course, the amount of the spend cannot exceed the total BTC value of the transaction's inputs so the offerer cannot offer more than the bitcoins owned. |

| Offer-QTY-min | |
|---|---|
| Offer-Item-ID | |
| Offer-Description | Keywords: This is a Condition that must be set if the Offer is goods/service and there is no other identifier (such as an auction site catalogue number) |
| Rate-min | This is the minimum rate of exchange that the offeror will accept expressed by convention as (requested units)/(offered units) |
| | Examples: |
| | (1) BTC offered for shares in a commodity (such as part ownership of a racehorse) |
| | rate = shares/satoshis |
| | (Note: this also applies to tokens that are non-divisible such as a concert ticket, although in this case there is only one share) |
| | (2) Token share offered for BTC |
| | rate = satoshis/share (e.g. satoshis/cent, where the tokens are for fiat amount such as CAD) |
| | (3) Token for token |
| | rate = requested-share/offered-share (e.g. cents/rupiah, where token offered represents rupiah and requested is CAD) |
| | Note that this is only a convention for the sake of consistency and convenience and will make matching easier. The rate could be just as easily be converted into requested-satoshis/offered-satoshis based on the pegging rate used on the tokenisation contract. |

| Rate-max | |
|---|---|
| Conditions | This will be a code to indicate up to 8 conditions that will be coded in separate metadata fields. For example: |
| | . Deadline (in Unix time) |
| | . Location (described in more detail below) |
| | The format of these metadata fields depends on the type of condition. |
| | Note that Offer-Description and Request-Description are also considered conditions. They are usually not needed as all the information required normally be can be coded into the other metadata fields. If they are needed then they need to be flagged as existing by switch on the appropriate flags in the Conditions bitfield. |

| Request-type-code | |
|---|---|
| Request-item-ID | |
| Request-description | Keywords: This is a Condition that must be set if the Request is goods/service and there is no other identifier (such as an auction site catalogue number) |
| Request-QTY-max | |
| Request-QTY-min | |

One purpose of the exchange service provider 104 is to provide a gateway for users 106, 108 to place invitations or offers for an exchange of an entity on the P2P DHT and/or the P2P DL. Whilst the users 106, 108 of the network 102 may themselves place invitations on the P2P DHT and/or the P2P DL, the exchange service provider 104 provides an interface with which invitations are generated. Furthermore, the exchange service provider 104 may reduce the dangers associated with direct handling of transactions on a distributed ledger, such as the Bitcoin blockchain (e.g., losing transactions etc.) as the skilled person will appreciate. In addition to enabling the publishing of user invitations on the P2P DHT and/or P2P DL, the exchange service provider may perform one or more of the following additional services:
- Matching invitations - As described above, an invitation may include a) details of the entities a user wishes to exchange, and b) one or more user applied options/conditions, such as a location condition, attached to the exchange. Two invitations may match when their respective entity details are mirrored and one or more of the conditions of the two invitations are compatible. In other words, a match may occur when one or more parameters or features included in a first invitation is/are also included in a second invitation. The is some commonality between one or more of the features of the invitations. An example of mirrored entity details would be when a first user (Alice) offers Bitcoins for apples and a second user (Bob) offers apples for Bitcoins. The service provider may therefore provide a matching service to match compatible invitations in order to accommodate an exchange. Matching may involve scanning the P2P DHT for one or more invitations having matching entities and/or conditions. In some embodiments, the service provider 104 may scan the P2P DHT in response to a request from a user. For example, a user may provide to the service provider 104 one or more criteria for a desired invitation. Based on the criteria provided, the service provider 104 may then search for invitations already placed on the P2P DHT which match those criteria. In other embodiments, the service provider 104 may implement a non-specific pairing algorithm which searches the P2P DHT for matching or near-matching invitations which do not relate to a specific user request. It will be appreciated that matching services may be provided by other third-party providers. One or more third-party providers may exist, whose primary purpose is to provide matching services in accordance with the above as well as match alerts as described below. In some embodiments, matching is provided by a matching service provider (MSP).
   In accordance with one or more embodiments, and with reference to the table shown in the "Structure of an Invitation" section above, a matching algorithm from matching invitations between A and B such as the following may be employed:
      A's Offer-type-code must match B's Request-type-code
      A's Request-type-code must match B's Offer-type-code
      A's Rate-Min ≤ B's Rate-max (when expressed in equivalent units)
      A's Rate-Max ≥ B's Rate-min (when expressed in equivalent units)
      Request-item-ID must match Offer-item-ID
      A's Request-QTY-min ≤ B's Offer-QTY-max
      A's Request-QTY-max ≥ B's Offer-QTY-min
      A's condition(s) (if any) must be compatible with B's invitation
      B's condition(s) (if any) must be compatible with A's invitation
   The invention may be arranged to incorporate machine-executable rules which enforce this algorithm or a variation thereof.
- Match alerts - If a match or near-match is detected, the exchange service provider 104 may alert a user in a known manner, such as by email or via a phone or tablet app. Thus, the invention may provide a novel communication or alert mechanism.
- Generating new invitations based on matches - Where a user provides details of an invitation or offer the user wishes to place, the service provider 104 may scan the P2P DHT for one or more invitations which satisfy the conditions of the user's order. If a matching invitation is then found on the P2P DHT, the service provider 104 may generate an invitation which mirrors the identified invitation already on the P2P DHT in order to facilitate a successful match. It is noted that in order to complete the final transaction on the P2P DL, all parties to a transaction must have an invitation already published on the P2P DHT. However, not all invitations need be published on the P2P DHT. In the present example, for instance, the service provider need not publish the offer on the P2P DHT since there is no requirement for the invitation to be advertised as a desired match has already been found. It will be appreciated, however, that the generated invitation may still be placed on the P2P DHT, for example, in case the initial match falls through.

- Executing transactions - After a pair of invitations have been successfully matched, the service provider 104 may act as a proxy to implement the final transaction. For example, on determination that two invitations provide an exact or near match, the service provider 104 may record an actual transaction, i.e. a transaction involving an *exchange of the entity,* on the P2P distributed ledger. This process may be conducted automatically without the parties express authorisation or after prompting one or more of the parties to authorise the transaction. In some embodiments, metadata in an invitation may indicate whether or not a party must be notified before an exchange is finalised.
- Verifying fulfilment of conditions - where an invitation includes a condition, such as a location condition, the exchange service provider 104 may determine whether the condition is being fulfilled before finalising the exchange. With regard to the location condition, the exchange service provider 104 may, for example, determine the current location of a user when two invitations have been matched.
- eWallet services - In addition to the above, the service provider 104 may also provide conventional eWallet services such as the holding of cryptocurrency keys etc.

A single service provider 104 is shown in the system 100 of Figure 1. However, it will be appreciated that one or more additional exchange service providers may be part of the network 102. Where more than one exchange service provider exist, users may choose an exchange service provider depending on their requirements, which may, for example, include the service provider's fee structure, location, compatibility etc. It will therefore be appreciated that, in certain circumstances, two users with matching invitations may use different exchange service providers. In such circumstances, the users' respective exchange service providers may communicate with each other in order to facilitate matching of invitations and/or an exchange of an entity.

In addition to the exchange service providers 104, an escrow service provider 110 may be part of the network 104. The escrow service provider 110 enables a user's offer to be held (i.e. the amount offered is reserved) until a transaction is settled, or under certain conditions to cancel an order and have returned anything that was offered in an invitation. The escrow service provider 110 acts as a neutral third party, trusted by two parties of a transaction, to provide an escrow service for transactions. Thus, the system allows users participating in a final transaction to have a guarantee that the user making an offer can fulfil the offered amount (in Bitcoins or tokens).

As with exchange service provider, more than one escrow service provider may be part of the network 104. Users of the P2P exchange system 100 may also choose which escrow service provider they use, if and when they use one. In some embodiments, the services of the escrow service provider 110 may be incorporated into those of the exchange service provider 104 or vice versa. In such case, a separate escrow service provider may not be required.

In addition to the above, the system 100 may also comprise an issuer 112. An issuer 112 may be involved where the transaction involves the exchange of a token. In such circumstances, the process involves the issuer signing the token. Every transaction involving the transfer of a token may involve the issuer 112. In embodiments described herein, the issuer's signature is required in the invitation transaction, in which the token is offered and held in escrow. The issuer's signature may also be required in the exchange transaction, in which the payment of the token is made to the counterparty.

An aspect of embodiments of the present disclosure is the ability to embed metadata concerning an invitation or offer to perform an exchange of an entity in a Bitcoin transaction (or other cryptocurrency transaction) as well as the ability to embed metadata concerning an actual exchange of the entity, in a Bitcoin or other cryptocurrency transaction. Embodiments described herein use multi-signature pay to script hash (P2SH) type transactions to enable such metadata embedding as described below.

### (i) Redeem script in P2SH in general

As background, in a standard pay-to-script-hash method of the bitcoin protocol, the redeem script may take the form of:
<NumSigs PubK1 PubK2 ... PubK15 NumKeys OP_CHECKMULTISIG> where
NumSigs - is the number "m" of valid signatures required to satisfy the redeem script to unlock the transaction
PubK1, PubK2 ... PubK15 - are the public keys that correspond to signatures that unlock the transaction (up to a maximum of 15 public keys)
NumKeys - is the number "n" of public keys (which must be 15 or less)

To redeem the above redeem script, at least a number "m" of signatures corresponding to the public keys are required. In some examples, the order of the public keys is important and the number "m" out of "n" signatures for signing must be done in sequence. For example, say that "m" is two and the number of public keys "n" is fifteen. Say that two signatures are available for use, say Sig1 (corresponding to PubK1) and Sig 15 (corresponding to PubK15), the redeem script must be signed by Sig1 first followed by Sig15.

### (ii) Embedding metadata in a P2SH

Metadata may be embedded in a P2SH in one or more of the 15 places available for the public keys in the redeem script.

For example, the P2SH may take the form of:
<NumSigs Metadata1 Metadata2...PubK1 PubK2...NumKeys OP_CHECKMULTISIG> where
NumSigs - is the number "m" of valid signatures required to satisfy the redeem script to unlock the transaction,
Metadata1 and Metadata2- each include metadata that takes place of a public key,
PubK1 and PubK2 - are actual public keys, and
NumKeys - is the total number of positions taken by the metadata and the public keys (which must be 15 or less).

By placing, in a redeem script, metadata corresponding to conditions of an invitation, details of a contract associated with a token, and/or other information associated with an exchange, the hash of such information will be included in the P2P distributed ledger.

This embedding method can be summarised as:
generating a blockchain transaction (Tx) having an output (TxO) related to a portion of cryptocurrency and a hash of a redeem script which comprises:
metadata comprising a token which is a representation of, or a reference to, a tokenised entity;
   and
at least one (preferably two or more) public cryptographic keys.
The tokenised entity could be a contract and/or other entity relating to the exchange. The metadata is provided in a location designated by the protocol for a cryptographic key.

Thus, the use of multi-signature P2SH bitcoin transactions in embodiments of the present disclosure offers several advantages. Firstly, it enables an invitation transaction to carry a metadata payload. Secondly, it facilitates the use of escrow services in an exchange transaction. Thirdly, where tokens are transferred in an exchange, it allows an exchange transaction to carry metadata associated with the one or more tokens being exchanged. Also, the underlying blockchain protocol is agnostic to the fact that metadata is being transmitted via the transaction. Therefore, no change is required to the blockchain protocol to convey this information.

Metadata may include a description or keyword describing an offer or request in an invitation transaction. Metadata may also include conditions associated with the invitation. For example, a location condition may be attached to the invitation which may specify a geographical location at which the exchange of the entity must take place. In addition to the location condition, a deadline condition may further be attached to the invitation. In this regard, a cancellation transaction may be generated which spends the same Bitcoin amount and contains a locktime representing the deadline for the exchange to take place. The cancellation transaction may be prevented from being distributed on the P2P DL until the locktime. If the exchange does not take place by the deadline, the cancellation transaction is added to the P2P DL and effectively pays back the payer and or service provider. If the exchange takes place before expiry of the deadline at the specified geographical location, the exchange transaction may spend the amount, creating a double-spend that hits the P2P DL ahead of the time-locked cancellation transaction, thereby blocking the cancellation transaction. In some embodiments, the metadata may not include a deadline, but instead the cancellation transaction can be solely responsible for cancelling the original invitation transaction. Alternatively, the deadline metadata condition may not automatically cause the spending of a cancellation transaction. In other words, the deadline may be a soft deadline which remains at the payer's control. This deadline may, therefore, be extended by a party simply allowing it to lapse and still accept late matching invitations. Equally, a service provider may still attempt to match an expired order if it remains unspent.

Instead of locking in the cancellation transaction at the same time as placing the invitation transaction, a user may wait until after the deadline and manually enter the cancellation transaction if and when the user wishes.

As mentioned above, a condition may include one or more location conditions which specify, for example, that an exchange transaction is only broadcast onto the P2P DHT if the location of the transactional broadcast is within X metres of specified GPS coordinates. This ensures that the transaction can only take place at a specified location, for example, Bob's coffee shop. This is described in more detail below

A facility may exist that enables users to create their own new conditions and add them to the list of conditions by allocating them a previously unused condition-code. This facility may be resistant to abuse. For example, each service provider may simply make public their own table of conditions along with an associated condition-code and other parties to the system 100 can choose to adopt the same coding and may also add new ones of their own. Then if disputes arise due to, for example, re-use of condition code, the disputes may be resolved by the service provider or other users of the system 100.

Some examples of implementation of the present disclosure will now be described by way of example offers and transactions between the first user 106 (referred to herein as Alice) and the second user (referred to herein as Bob).

### Posting an invitation

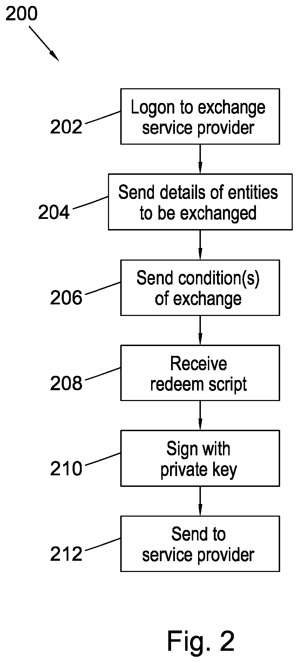

In a first example, Alice wants to buy some tokenised Canadian dollars (CAD) in exchange for Bitcoins. To advertise her interest, Alice contacts her exchange service provider 104 through, for example, a web interface or via an app running on a tablet or cell phone. As shown in Figure 2, at step 202, Alice logs into the service provider's 104 web interface. At steps 204 and 206, Alice then sends details of her invitation, including entities to be exchanged (tokenised CAD for bitcoin) and conditions of the exchange and any selected options offered by the service provider, to the service provider. Alice may input this information into an interface hosted by the service provider 104, for example, using normal language which can then be translated by the service provider 104 into a valid invitation or, alternatively, Alice may simply enter the information by pre-selecting options, e.g., via drop-down selection menus.

At step 208, Alice receives from the service provider 104 a redeem script which has been generated by the service provider 104 based on her selections and includes information concerning the entities Alice wishes to exchange and any conditions associated with the invitation. Because Alice has signed up to use the particular service provider 104, the service provider 104 may already have Alice's public key. Alternatively, Alice may provide her public key to the service provider 104 either during the initial selection, or in response to a request from the service provider 104.

Alice signs the redeem script at step 210 using her private key, which is a cryptographic pair to her public key, and at step 212 sends the signed redeem script back to the service provider 104 to be distributed. This process may be supported with the use of an app, which may itself be provided by the service provider 104.

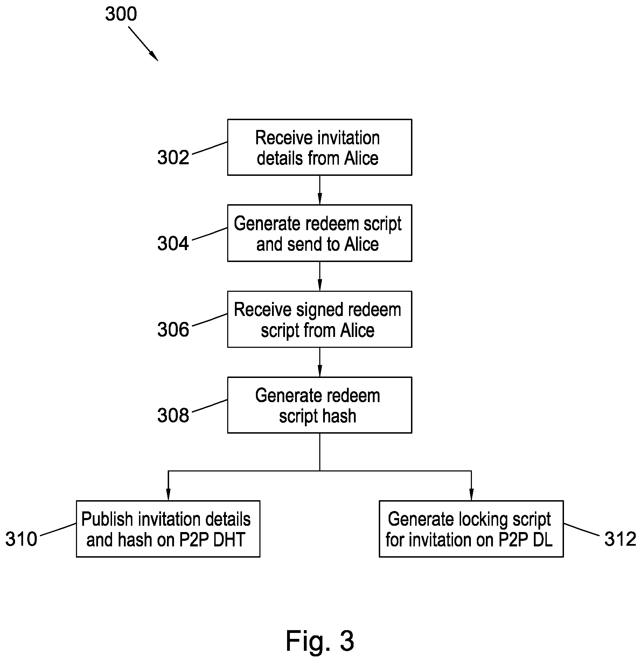

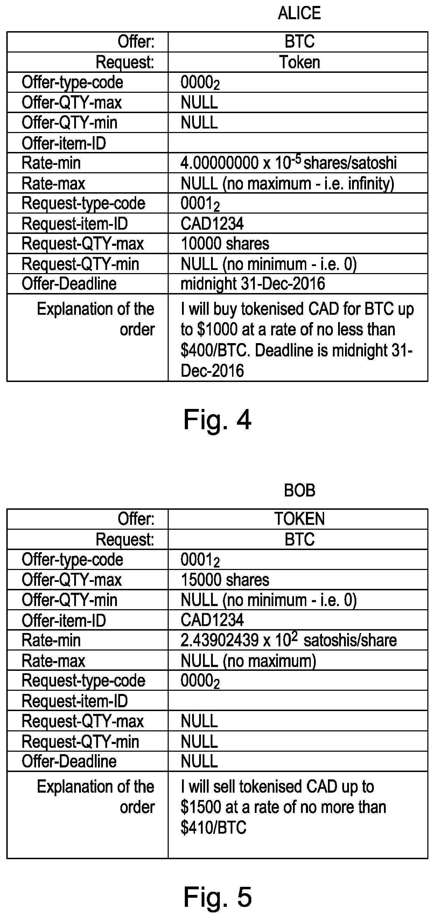

The flow diagram 300 shown in Figure 3 illustrates the corresponding process performed by the service provider 104. At step 302, the service provider 104 receives the invitation details from Alice and generates a redeem script at step 304 using Alice's public key, the entity details and the conditions of the invitation. The redeem script may be in a format suitable for a P2SH bitcoin transaction; the invitation details may be stored in metadata fields in place of 32-byte public keys usually used in multisig unlocking scripts. Figure 4 illustrates a format of the metadata for Alice's invitation, according to one embodiment. In the invitation, Alice requests tokenised CAD and offers bitcoins in return at a rate of no less than 400 CAD/bitcoin. As will be explained below in more detail, Figure 4 also shows a deadline condition which may be added to the invitation. The deadline condition may cause the invitation to be revoked at the deadline in the event that an exchange has not been finalised based on the invitation.

The redeem script is then sent to Alice for signing. Upon receipt of a signed redeem script from Alice, at step 308 the service provider 104 generates a hash of the signed redeem script.

The service provider 104 may use the hash in two ways. Firstly, at step 310, the service provider 104 lists the invitation details along with the hash on the publicly available P2P DHT. As mentioned above, this table employs the torrent technique so it is distributed rather than centralised and hence it will remain publicly accessible and safe from alteration. Other service providers 104 are then able to access the invitation and list it on their own site (indeed, the service provider 104 may simply use the hash table as the sole repository and need not even maintain its own local database of invitations.

The second way the hash is used is to create a locking script of a Bitcoin transaction, at step 312. This transaction spends an amount of Alice's bitcoins to a P2SH script requiring 2 signatures to unlock: Alice's signature and that of her nominated escrow service provider 110 (which, as mentioned above, might or might not be the same entity as the service provider 104). The purpose of this transaction is twofold. Firstly, the invitation is logged on the P2P DL. Any user or their service provider can verify that the invitation on the P2P DHT is legitimate by ensuring that there exists a matching transaction on the P2P DL (via the matching hash values). Secondly, the transaction 'locks' the commitment made by Alice in her invitation; the amount of bitcoins Alice is offering in exchange for tokenised CAD is the amount spent by the order transaction. Thus, it can be verified that the order is backed by sufficient funds.

### Pairing matching invitations

In a second example which refers to the above described first example, Bob wants to sell some of his tokenised CAD for BTC and has independently listed his own invitation either using the same or a different service provider to the service provider 104 used by Alice. Bob's order, too, has been listed on the hash table and embedded in a P2P DL transaction as described with reference to Figures 2 and 3. The metadata of Bob's invitation is illustrated in Figure 5.

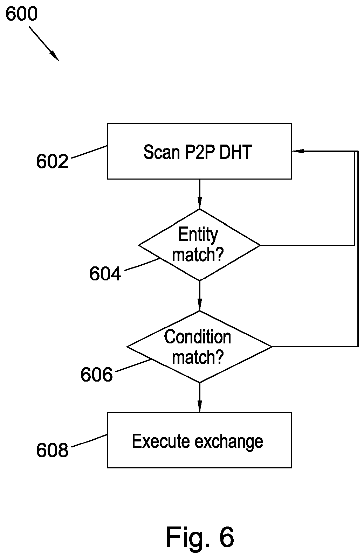

Referring to Figure 6, a process 600 of matching Alice's and Bob's orders is described. In this example, the service provider 104 is described as performing the process. However, it will be appreciated that any exchange service provider or, indeed, any other suitable third-party may perform the process 600.

The exchange service provider 104 may run a matching algorithm operable to identify a full or partial match between Alice's and Bob's invitations. At step 602, the exchange service provider 104 scans the P2P DHT for matching entity details. During the scan, the service the provider 104 checks for a match between the entity details of Alice's and Bob's invitations. If a match is not found at step 604, then the process returns to step 602 and the exchange service provider 104 continues to scan the P2P DHT for matching entity details. If a match is found at step 604, the process 600 continues to step 606 where a check is made for a match between one or more of the conditions of each of Alice's and Bob's invitations. If no match is found at step 606, the process returns to step 602. If a match between one or more conditions is found, then the process moves to step 608 in which the exchange service provider 104 attempts to create and finalise a transaction between Alice and Bob.

A direct match of all conditions in the two invitations may not be required at step 606 for a positive match to be confirmed. Indeed, the process 600 may only require that some of the conditions match. Additionally or alternatively, one or more of the conditions need not fully match. For example, if conditions being compared are exchange rates proposed in each condition, the process 600 may confirm a positive match provided the rates are within a predetermined threshold range of each other. For example, if Alice proposes a minimum rate condition of 4 x 10⁻⁵ tokenised CAD/satoshi and Bob's equivalent minimum proposed rate is 3.9 x 10⁻⁵ tokenised CAD/satoshi, the process may still confirm a condition match even though Bob's offered rate doesn't quite satisfy Alice's original requirements. In such circumstances, upon match, Alice may be given an option to accept. It will be appreciated that if Bob's equivalent minimum proposed rate is 4.1 x 10⁻⁵ tokenised CAD/satoshi, then the condition would be satisfied. In another example, the conditions might be respective values for goods and services proposed in an offer and request. The process 600 may again confirm a positive match provided the two values are within a predetermined threshold range of each other. In each case, the predetermined threshold range may be, for example, a discrete value or a percentage of the offer value or request value.

As stated previously, the transaction metadata for each or both of Bob's and Alice's invitations may further comprise one or more location conditions which may specify, for example, that a transaction is only broadcast onto the P2P DL if the location of the transactional broadcast is within X metres of specified coordinates. This ensures that the transaction can only take place at a specified location, for example, Bob's coffee shop.

Once a match is found, and before completing the transaction, one or more intervening steps may be performed. These may include an alert to the parties that a match has been found, followed by a request to each or both parties for confirmation that they wish to proceed, etc. For example, as discussed above, where a condition is nearly but not fully met by one or more users, a match may still be recorded but not finalised until all parties are happy with the conditions of the invitations. This process may lead to counter offers to negotiate a final agreement on conditions, which may then lead to the generation of further invitations in accordance with processes described above.

The final exchange may be executed by creating one or more bitcoin transactions that spend the outputs of each invitation transaction. The inventors have found several methods of completing the transaction, which may depend on circumstances including but not limited to: the users involved in the transaction, the entities being exchanged, and the service providers and issuers involved in the transaction. Some examples of these methods are described below.

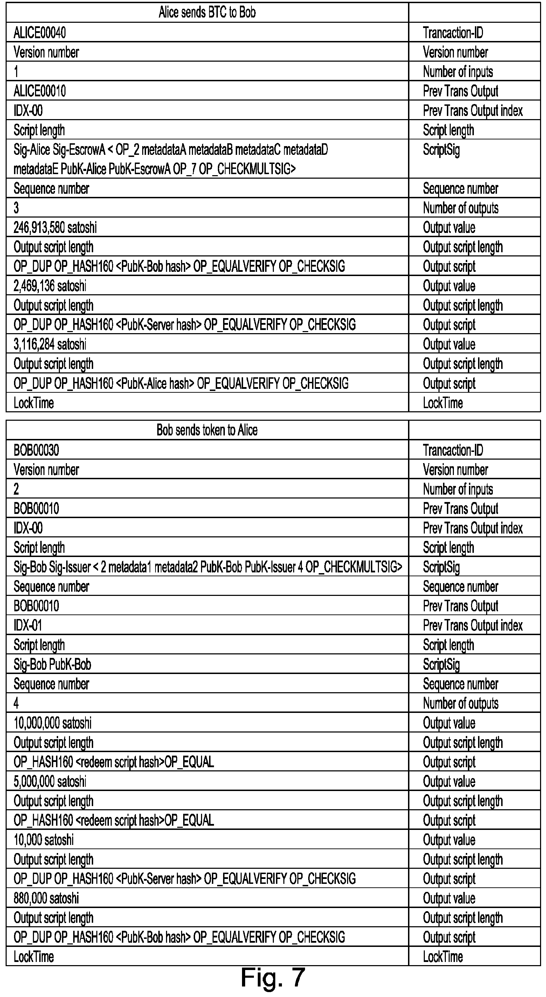

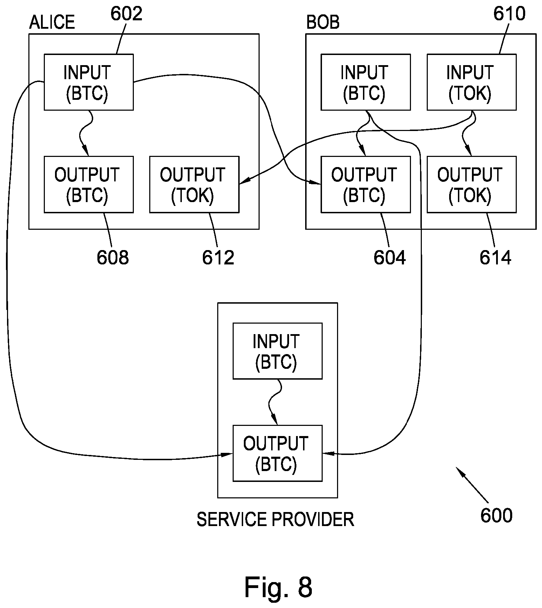

Following on from the examples described above with reference to Figures 2 to 6, a transaction table 500 for the separate transactions for Alice-Bob and Bob-Alice is shown in Figure 7 and a schematic diagram 600 of the transaction flow is shown in Figure 8. As with the metadata values shown in Figures 4 and 5, values provided in the transaction table 500 are shown. In this example, Alice's bitcoins in her invitation transaction are spent to Bob, and Bob's CAD-tokenised bitcoin in his invitation transaction are spent to Alice.

Referring first to the Alice-Bob transaction, the input 602 of this transaction is provided from the output of the invitation transaction which was placed on the P2P DL with Alice's invitation. Like the first transaction, the input script is signed by both Alice and the escrow service provider 110 (assuming Alice is happy for the transaction to proceed). The script unlocks the spent bitcoins which can then be output to a) Bob as his payment in return for the tokenised CAD (604), b) the exchange service provider 104 as payment for the exchange (606), and c) to Alice as change if any is due (608).

Referring now to the Bob-Alice transaction, this transaction has two inputs. The first input 610 of the transaction is provided from the output of the invitation transaction which was placed on the P2P DL with Bob's invitation. Because the input to this transaction is tokenised, the input script needs to be signed by both Bob and his token issuer. In this circumstance, the token issuer may also operate as an escrow, thereby withholding the funds until Bob (and optionally Alice) are satisfied with the transaction. The signed script unlocks the spent tokens which can then be output to a) Alice as payment in return for the BTC (612), and b) back to Bob as a change token to the value of the original token less the value sent to Alice (614). The second input 616 is from a previous bitcoin transaction of Bob. This input is unlocked and output to a) the service provider 104 as payment for the exchange, b) the bitcoin miner as a fee for the exchange transaction and c) to Bob as change in bitcoins to the value of the original bitcoin input value less the service provider's 104 fee and the miner's fee.

The service provider's 104 fee for each transaction may be a slice of the value of the transaction. Alternatively or additionally, the fee may be a slice of the exchange rate spread between corresponding rate conditions presented in the two invitations. For example, where the offered rates overlap, the service provider 104 may fulfil both sides of the exchange at the asking rate of each and retain the difference as the fee. Alternatively or additionally, a flat fee (in satoshis, tokenised currencies or other) may be taken by the service provider 104.

Once the transaction has been completed, Bob's and Alice's respective service providers may remove their invitation entries from the P2P DHT or enter a further entry which nullifies the original entry. For example, a service provider may simply leave the entry on the P2P DHT since the entry corresponds to a spent transaction, which implies that the invitation is no longer valid. Alternatively, a service provider may mark the transaction with a field that specifies that it has been spent. This may be a separate field on the DHT which corresponds to a particular entry but does not change the actual metadata associated with the invitation (this ensures that the script hash still matches the hash on the transaction). Alternatively, a service provider may delete the entry from the P2P DHT. However, a benefit of the P2P DHT is a permanent audit control for transaction using the system 100. Preferably, therefore, deletion of entries from the P2P DHT is prevented or deleted entries are archived so as to maintain a record of the entry. In one example, deleted entries are archived.

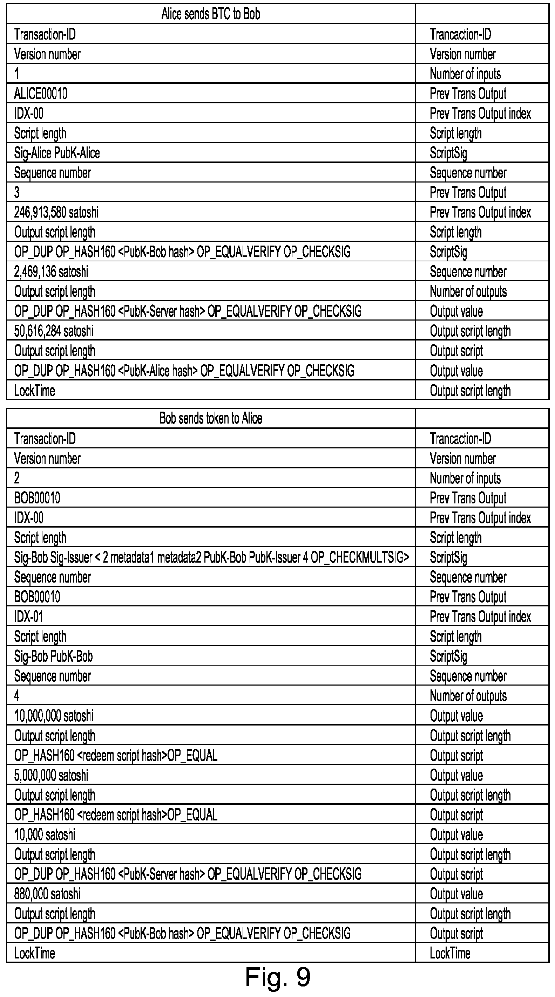

In the above example transaction, no puzzle is exchanged. In other words, the two transactions (Alice-Bob and Bob-Alice) are completely separate and discrete. It may be preferable in some cases, however, for the two transaction either to be valid or invalid. Figure 9 shows an alternative transaction example in which a puzzle is exchanged in Alice's transaction (Alice-Bob). By doing so, the two transactions are locked together so that one cannot be spent without the other also being spent. This prevents a transaction going through from one party to another without the opposite transaction also going through.

In the above two example two bitcoin transactions are performed to complete the exchange. Where possible, however, it is preferable to consolidate the above two transactions into a single bitcoin transaction. Doing so automatically locks together the two parts of the exchange and leads to a reduction in the overall fees paid by Alice and Bob for the transaction.

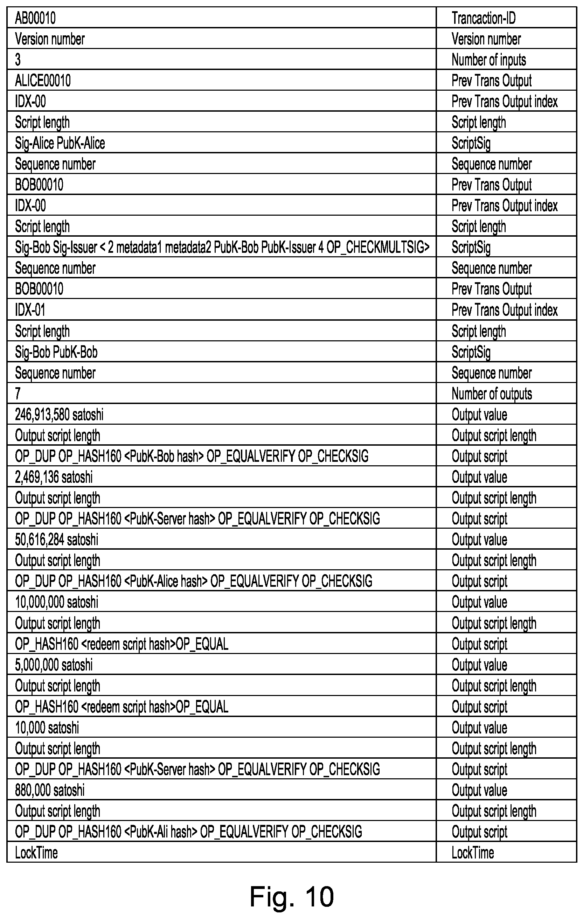

Figure 10 shows a transaction table 700 for the single transaction between Alice and Bob. The transaction flow for the exchange is the same as that of the previous two examples, i.e. as shown in Figure 6. However, the exchange is consolidated into a single multi-input-multi-output (MIMO) transaction. It is noted that in Figure 8, two separate fees are paid to the exchange service provider 104. However, if the exchange service provider 104 is the same for both Bob and Alice, these two fees may be consolidated into a single transaction, paid by Bob or Alice, or both Bob and Alice.

### Posting an invitation

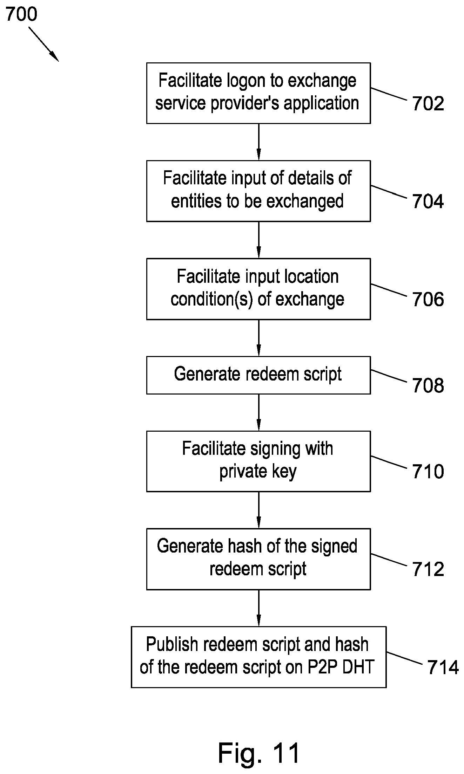

In a third example, Bob offers an exchange of a gold nugget for a specific amount of Bitcoins. To publish his offer, Bob contacts a first third party, which in this case represents his exchange service provider 104. In this particular example, the exchange service provider 104 provides a communication interface that is implemented by a software application running on Bob's cell phone. Thus, Bob can enter his offer for the exchange of the gold nugget using the software application on his cell phone as will be described in more detail below with reference to the process 700 shown in Figure 11.

As shown in Figure 11, at step 702, Bob logs onto the exchange service provider's 104 software application on his cell phone and enters at steps 704 and 706 details of his offer into the application. The details of the offer in this particular example include the entity offered for exchange, i.e. the gold nugget, an expected amount of Bitcoins in exchange for the gold nugget, and a location condition.

The location condition may include one or more of the following information:
a) location information indicative of a geographical location or area for the exchange of the gold nugget;
b) location format information indicative of a format of the location information;
c) range information indicative of a range limit on the geographical location or area relating to the exchange; and
d) range format information indicative of a format of the range information.

**In** this particular example, the location condition of Bob's offer specifies an area which is defined as range of 20 metres from Bob's store "the Gold Emporium". The range of 20 metres may be specified to allow for known limits to accuracy of GPS readings by Bob's cell phone in the specified area. However, it will be appreciated that a range may be specified for various reasons. For example, the location condition may specify a country or a city in which the exchange needs to take place.

Bob may input the above mentioned information into an interface hosted by his service provider's 104 software application, for example using normal language which can then be translated by the service provider 104 into a valid offer or, alternatively, Bob may simply enter the information by pre-selecting options, e.g., via drop-down selection menus.

At step 708, a redeem script is generated using Bob's public key and Bob's selections which include information concerning the entities Bob is offering for exchange and any conditions including the above location condition associated with the offer. Bob's public key is part of an asymmetric cryptographic pair which comprises a private key and the public key. **In** addition, the generated redeem script includes a further public key that is the service provider's 104 public key.

At step 710, the software application facilitates Bob to sign the generated redeem script with his private key which corresponds to the above mentioned public key. The generated redeem script may be in a format suitable for a P2SH bitcoin transaction; the invitation details may be stored in metadata fields in place of 32-byte public keys usually used in multisig unlocking scripts as described above.

At step 712, a hash of the signed redeem script is generated. At step 712, the script along with the hash is published on the publicly available P2P DHT. As mentioned above, this table employs the torrent technique so it is distributed rather than centralised and hence it will remain publicly accessible and safe from alteration. The invitation can be accessed by other users and exchange service providers.

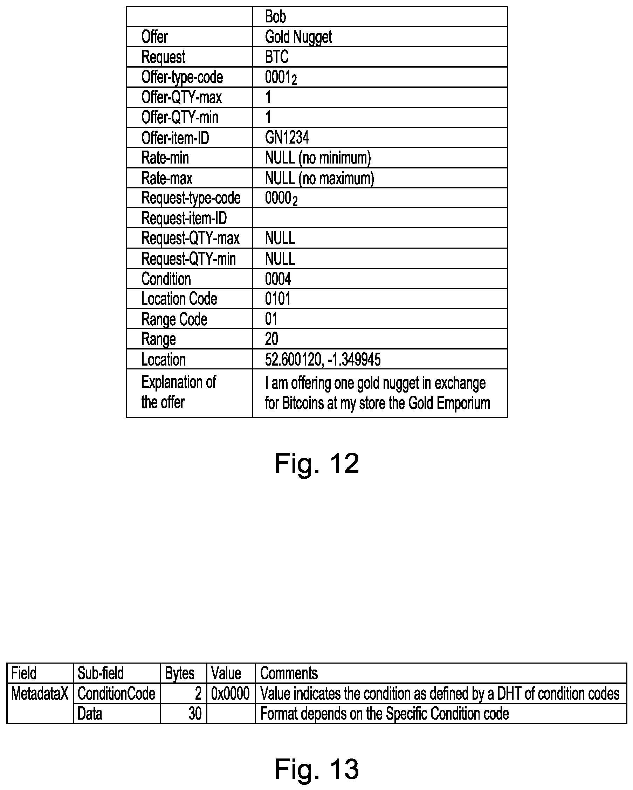

Figure 12 illustrates a format of the metadata for Bob's script, according to one embodiment. In the invitation of the script, Bob requests Bitcoins in exchange for a gold nugget. As will be explained below in more detail, Figure 12 also shows the above mentioned location condition which is added to the invitation.

The general format of condition metadata blocks in the P2P Exchange model is shown in Figure 13. Metadata blocks are 32 bytes long. The first two bytes of a Condition metadata block are a numeric code which defines the condition, as specified via a separate look-up table such as distributed hash table. The format for the remaining 30 bytes of a Condition metadata block will depend on the Condition.

As shown in the example for Bob's script in Figure 12, the location condition in this particular scenario is allocated the value 0004.

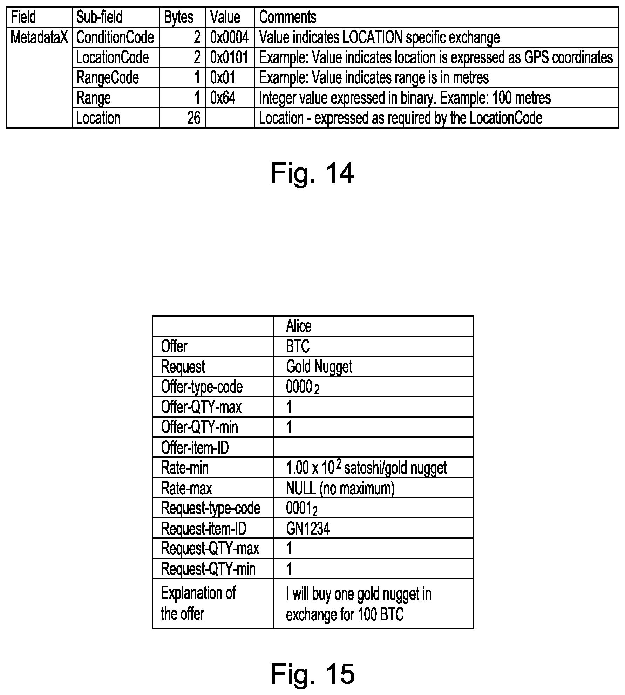

The general format of a location condition code is shown in Figure 14 in which explanations for the fields are as follows:
- LocationCode: 2 byte numeric code indicating the format of the Location. A separate look-up table defines the codes and their specification (see for example paragraph [111]).
- RangeCode: Optional value indicating the units of measurement to specify an acceptable range subcondition. If set to 0x00 then no range subcondition is specified. A separate look-up table defines the codes and their specification (see for example paragraph 112).
- Range: Optional value indicating the acceptable range subcondition. This value is irrelevant (ignored) if RangeCode = 0x00
- Location: The actual location, specified in the format required by the LocationCode

As will be appreciated, a location condition can be specified in different formats. Some specific, non-limiting examples are given below:

| LocationCode | Description | Byte Format |
|---|---|---|
| 0x0101 | GPS Co-ordinates | 01 - 01: 'N'/'S' |
| | | 02 - 08: degrees (NN) minutes (NN.NNN) |
| | | 09 - 09: 'E'/'W' |
| | | 10 - 17: degrees (NN) minutes (NN.NNN) |
| 0x0001 | USA Zip Code | 01 - 05: NNNNN |
| 0x0061 | Australia Postcode | 01 - 04: NNNN |
| 0x1044 | UK Building Name and Level | 01 - 23: first 23 characters of building name |
| | | 24 - 26: level number (NNN) |

As mentioned above, the location condition may further specify a range from the specified location. The range may allow for known limits to accuracy of GPS readings or may define an area in which the exchange of the entity must take place for the exchange to be finalised. Some examples for the format of the range code is given below:

| RangeCode | Description |
|---|---|
| 0x00 | No Range specified |
| 0x01 | Metres |
| 0x02 | Kilometres |
| 0x11 | Within adjoining category [e.g.: |
| | if LocationCode = 0x0001 then this would mean 'adjoining USA postcode'; |
| | if LocationCode = 0x1044 then this would mean 'next floor above or below'; etc.] |

### Matching an Offer

In a fourth example which refers to the above described third example, Alice has seen Bob's offer on the P2P DHT and goes to Bob's Gold Emporium as specified in the location condition of Bob's script to inspect the gold nugget.

On examining the gold nugget and negotiating an amount of Bitcoins in exchange for the gold nugget, Alice creates a matching offer using a software application that is running on her cell phone. In particular, the software application facilitates Alice to enter details of the entities to be exchanged, i.e. one gold nugget in exchange for the negotiated amount of Bitcoins. Using the entered details, a redeem script is generated for Alice which is then hashed and published together with the hash of the redeem script on the P2P DHT. The metadata of Alice's offer is illustrated in Figure 15.

In this particular example, Bob's script as shown in Figure 12 does not specify a minimum or maximum rate of Bitcoins for the exchange to be finalised. Thus, when the exchange service provider 104 runs the matching algorithm as described above to identify a match between Bob's and Alice's offers, Bob will be given an option to accept Alice's offer.

In this particular example, the process of matching Alice's and Bob's scripts further includes a step of verifying that the location condition is fulfilled which is specified in Bob's script as shown in Figure 12. This verification step may be performed in various ways.

For example, the exchange service provider 104 may communicate with Bob's and/or Alice's cell phone to determine the location of the cell phone. This location may then be compared with the location and the range specified in the location condition of Bob's script.

If the location is specified as a building name, such as Bob's Gold Emporium, the exchange service provider 104 may determine GPS coordinates associated with this location by communicating with a proprietary database or a further software application, such as Google maps. The determined GPS coordinates may then be compared with the GPS coordinates of Bob's or Alice's cell phone.

In a further example, the exchange service provider 104 may facilitate manual input by Bob and/or Alice to confirm that the location condition is fulfilled. This step may, for example, be conducted together with the step of accepting Alice's offer.

If the location condition is found to be fulfilled, the exchange service provider 104 will attempt to create and finalise a transaction between Alice and Bob. In one example, a transaction is only broadcast onto the P2P DL if the location of the transactional broadcast is within X metres of specified coordinates. This ensures that the transaction can only take place at a specified location, for example, Bob's Gold Emporium.

The final exchange may be executed by creating one or more bitcoin transactions that spend the outputs of each invitation transaction as described with reference to the first and second examples shown in Figures 2 to 10.

### Transactions involving more than two parties

Transactions described above have been in relation to exchanges between two parties and two entities. It will, however, be appreciated that in some examples more than two parties and/or entities may be involved in an exchange. Consider, for example, the following scenario. Alice wishes to exchange bitcoins for apples, but will only accept a minimum of 1000 apples. Bob wants to exchange apples for bitcoins, but can only supply 500 apples. Carol wants to exchange apples for bitcoins but can only supply 600 apples. In such a circumstance, the conditions of Alice's invitation cannot be satisfied by Bob or Carol individually. Together, however, Bob and Carol have 1100 apples and so can satisfy Alice's invitation conditions.

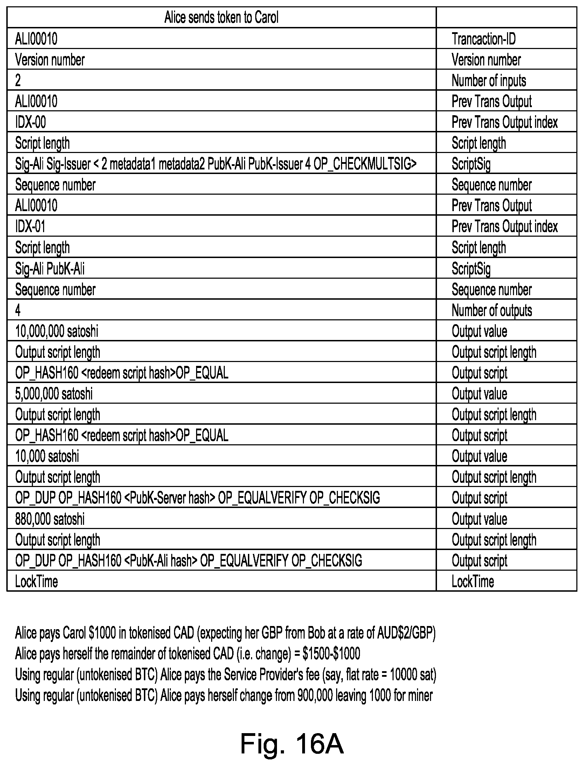

In another example, Alice wishes to exchange tokenised CAD for tokenised GBP, Bob wishes to exchange tokenised GBP for tokenised AUD, and Carol wishes to exchange tokenised AUD for tokenised CAD. No direct match exists between any two of the three parties, but combined, each of the invitations can be satisfied - Alice's tokenised CAD can go to Carol, Bob's tokenised GBP can go to Alice, and Carol's tokenised AUD can go to Bob. Figures 16A to 16C show exemplary transaction tables for transactions between Alice, Bob and Carol.

Referring first to Figure 16A, a transaction table is shown for the payment from Alice to Carol. Alice has $1500 of tokenised CAD and needs tokenised GBP500 from Bob. The transaction pays tokenised CAD1000 to Carol from Alice and Alice pays herself the remaining tokenised CAD500 (1500-1000). Using regular BTC, Alice may pay the service provider's fee (which may be a flat fee as is shown in Figure 11A or a fee dependent on the value of the transfer) and pays herself the change minus 1000 satoshis for the miner.

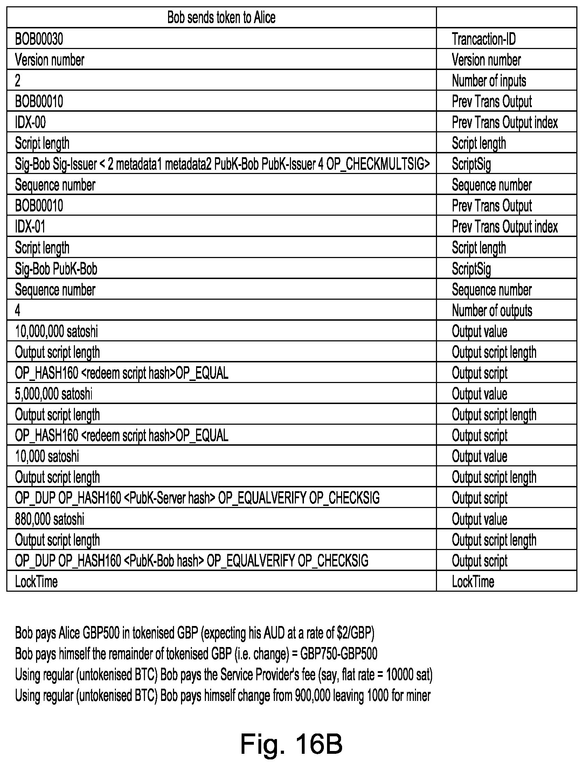

Referring now to Figure 16B, a transaction table is shown for the payment of tokenised GBP to Alice from Bob. Bob has tokenised GBP750 and needs tokenised AUD from Carol. The transaction pays tokenised GBP500 to Alice from Bob and Bob pays himself the remaining tokenised GBP250 (750-500). Using regular BTC, Bob may pay the service provider's fee (which may be a flat fee as is shown in Figure 16B or a fee dependent on the value of the transfer) and pays himself the change minus 1000 satoshis for the miner.

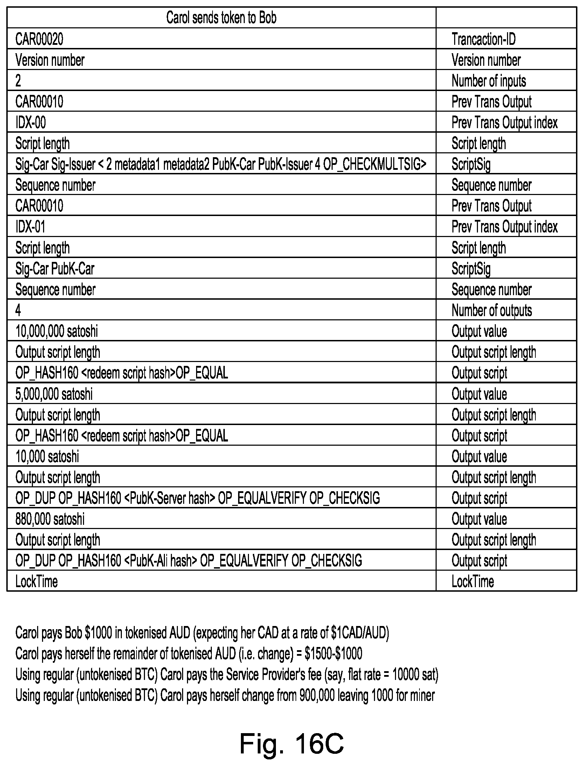

Referring now to Figure 16C, a transaction table is shown for the payment of tokenised AUD to Carol from Bob. Carol has tokenised AUD1500 and needs tokenised CAD from Alice. The transaction pays tokenised AUD1000 to Bob from Carol and Carol pays herself the remaining tokenised AUD500 (1500-1000). Using regular BTC, Carol may pay the service provider's fee (which may be a flat fee as is shown in Figure 11C or a fee dependent on the value of the transfer) and pays herself the change minus 1000 satoshis for the miner. It will be appreciated that where an exchange is composed of two or more separate transactions (e.g. 1: Alice transfers to Bob; and 2: Bob transfers to Alice), the transactions may be linked so as to ensure that either every party receives their entitlement or none of them do. This may be achieved by satisfying the following condition (using an example of two parties, A and B, but easily extendable to three or more parties): The transaction output transferring from A to B exists and is spendable by B only if the transaction output transferring from B to A also exists and is spendable by A at the same time, and vice versa. It is noted that party A and party B refer to the required set of signatories for each transaction, not just Alice and Bob (for example, it may include token Issuers, escrow, etc.).

### Receiving a selection from a user

In a variation of the example exchange described above with reference to Figure 6, instead of a service provider parsing the P2P DHT for matching orders, users themselves may scan or browse the P2P DHT to view the current invitations as described with reference to the above fourth example. Browsing may be facilitated by a third-party, such as the exchange service provider 104. The third-party may provide an interface within which users can browse, scan and search for invitations which they might be interested in.

Users may then skip the process of entering their own prospective invitation on the P2P DHT, but instead choose to create an invitation which matches or nearly matches the order which they're interested in.

For example, Bob may find Alice's invitation on the P2P DHT via a browsing or searching interface. In which case Bob may enter his own invitation to match that of Alice's. Bob may do this in one of several ways. In one example, there may be a facility on the interface which displays Alice's order to 'Accept' her order. If Bob is a client of the same exchange service provider 104 as that which Alice used for the invitation, they may already have access to Bob's eWallet (public key etc.) and can thus create the matching order based on such information. Accordingly, the exchange service provider 110 may generate a redeem script for the matching invitation, send this to Bob for signing, receive the signed redeem script and enter the order onto the P2P DHT in preparation for the transaction. If Bob is not a client of Alice's exchange service provider 104, a facility may be provided to allow Bob to enter the required information and authorisations that can then enable the Service provider to create Bob's matching order. The same process as that described above with reference to Figures 7 and 8 may then follow.

The above example describes the exchange of BTC for tokenised CAD. However, it will be appreciated that the system 100 works for any type of exchange including, for example, BTC for token of any type (i.e. representing any contract, not just for currency contracts), token of any type for token of any other type, BTC for goods/services, tokens for goods/services, or goods/services for goods/services. Additionally and theoretically, the above process can be modified to the exchange of BTC for BTC, although such an exchange has no real meaning.

### Exchanging goods/services

A slight variation of the above described transaction process is required when goods/services are involved in the exchange.

In such a case, the transaction (of the goods and/or services) comprises a description of the goods or services involved in the exchange. Unlike a token, which is represented by a contract or title deed, the description does not form a contract.

The description may or may not uniquely identify the item. For example, where a physical item is involved in the transaction, the description may refer explicitly to a unique identifier associated with that physical item. Additionally or alternatively, description metadata may include one or more of the following: a) a general description of a desired item offered or requested, e.g., "dishwasher, < 3 years", b) reference to a specific item for sale on an auction website, e.g., "second hand product put up for sale on an auction site", c) any number of an item type, e.g., advertise 15 t-shirts for sale that can be bought as singles or any quantity up to 15, d) reference to cash, in any specified currency, e) description of labour and payment per single job completion or for regular lawn mowing (repeating job) with payment per repetition or hour, or f) one or more keywords, e.g. "dishwasher".

With regard to services, services may be backed by a contract as with a token. As such, a service may be divisible into shares, and non-divisible services may be considered as one-time jobs, i.e. divisible but comprising a single share (1 share). If the service is non-divisible, it may be treated as a token for the purpose of invitation and exchange. Where an item is backed by a token it is treated as a token for the purpose of both invitation and exchange and is exchanged in the same manner as other tokens, such as tokens for fiat currency.

An example of a transaction involving a physical item associated with a unique identifier will now be described. Similar to previous examples, in the present example, Alice has used her exchange provider to place an invitation on the P2P DL and P2P DHT. The invitation includes a description that she will buy a physical item having unique identifier XYZ123, which may relate to Rafael's masterpiece *Deposition of Christ,* for no more than 2500 BTC. Equally, Bob may have placed a matching invitation that he will sell item XYZ123 for no less than 2400 BTC. Alice may have browsed the P2P DL and found the item with item number XYZ123 and placed a matching order based on this information or, alternatively, Alice may have placed a generic invitation which is then matched by a third party, e.g., an exchange service provider, and subsequently a new invitation including the catalogue item number and description is made to match Bob's order.

For transactions involving unique IDs, it will be appreciated that such IDs must be unique not only to a particular exchange service provider, but also across the entire P2P DL. Therefore, if the unique identifier is not unique to the device (e.g. the devices serial number) then the exchange service provider may generate a unique identifier for the device. To ensure that each identifier is unique to the entire P2P DL, each exchange service provider may, for example, have their own unique code prefixed to numbers they use to uniquely identify products being advertised on the P2P DL.

Once an agreement has been reached between Alice and Bob, the transactions may take place in accordance with the example transaction processes described above with reference to Figures 7 to 10.

A further example of a transaction involving a physical item will now be described. In this example, however, the item does not have a unique identifier associated therewith.

Where an invitation includes an offer to sell a plurality of similar items, metadata may be required to describe the maximum and minimum quantity of items which can be bought with any one transaction. For example, Alice may place an invitation inferring that she will sell up to 15 *Dead Lizard* 2015 concert tour t-shirts for 0.025 BTC each - at least 5 per transaction. In this case, metadata values may include a minimum rate (0.025BTC / 15 items); a maximum quantity (Offer-QTY-max (15)) and a minimum quantity (Offer-QTY-min (5)). The table below summarises the metadata associated with the invitation.

| **Field** | Sub-field | Value | Comments |
|---|---|---|---|
| A | ContractType | 0x0000FF01 | Indicates P2P Exchange Order |
| | ContractPointer | | IPv6 address of the actual contract file location |
| | OfferRequestCodes | | Coded value indicating Offer-type (4 bits) + Request-type (4 bits) |
| | Conditions | 00000011₂ | Bitfield - flags indicating the presence of extra conditions in metadata fields |
| | Rate-min | 0.025 | BTC / 15 items |
| | Rate-max | | |
| C | Offer-QTY-max | 15 | Maximum quantity of t-shirts per sale |
| | Offer-QTY-min | 5 | Minimum quantity of t-shirts per sale |
| | Request-QTY-max | | |
| | Request-QTY-min | | |
| D | Offer-Item-ID | 01245D2SA | Unique ID related to item |
| | Request-item-ID | | |

The actual BTC value on the payment transaction will then be calculated by an exchange service provider. Because this transaction simply represents an invitation to perform an exchange, the actual value of the transaction may be small, e.g. as small as dust (546 satoshis). Alternatively, as described below, the value may be a nominal amount required by a service provider to guarantee an invitation (e.g. so Alice is incentivised not to pull out).

In a further example, goods in the form of hard currency (cash) may be exchanged. For example, Alice may place an invitation to sell bitcoin for Canadian dollars (hard currency instead of tokenised) with a maximum purchase of 150 BTC. The invitation may additionally include a location condition that the exchange must take place at her shop address: 371 Whimsy Avenue, Brentford. After placing a matching invitation, in order to finalise the transaction, Bob may then bring the cash to Alice's shop to hand over in exchange for a payment in bitcoin transaction. The actual digital transaction of bitcoins to Bob and of the digital record of transfer of hard cash to Alice, may then take place once Bob and Alice have met in her shop for the physical transfer.

In the case of a transaction involving goods/services swapped for other goods/service, it will be appreciated that the transaction on the P2P DL exists as a record only and not for exchanging any value between parties (apart from any fees to service providers etc.). Users may use the system and opt to pay the nominal service fee for entry of the transaction onto the P2P DL so that the exchange is permanently recorded.

It is noted that the original invitation transactions act as invitations only and not as value transfer or as records of events. If a goods-for-goods exchange occurs, such that the exchange involves physical items only, the final exchange need not be recorded on the P2P DL, since the P2P DL is not required to complete any transactions in the final exchange. Notwithstanding, if parties to the exchange of physical items wish to record the exchange on the P2P DL, they may each spend their invitation transactions to one another subject to a fee for the miner for doing so. If the parties do not wish to record the final exchange on the P2P DL, they may each spend their invitation transactions back to themselves, or even leave them unspent on the P2P DL.

In the case of an exchange involving BTC for goods, or tokens for goods, at least one transaction is spent on the P2P DL to transfer the value of the BTC or token. In this case, the invitation transaction offering the goods may or may not be spent since the value of the exchange (goods) is not transferred by spending that invitation transaction. However, again, parties may decide to spend the transaction nonetheless, in order to provide a permanent record of the transfer (e.g., a receipt of sale).

The amount spent on the above transactions might not represent the offered amount in some cases, particularly when Alice's offer is not bitcoin or tokens but goods/service. Instead, the Service Provider might require a 'deposit' by Alice of an amount representing the value of the goods, or might only require a nominal amount if Alice is able to 'guarantee' the offer in another way, or (iii) might itself provide the bitcoins on Alice's behalf (she might not have any) and cover this funding cost by whatever means they charge a fee to the client.

In embodiments described above, users' invitations are published on a P2P DHT. In some embodiments, however, a user's invitation (e.g. the script and script hash) may be published on a website, or sent directly to another user.

In some embodiments, a user's invitation may be stored locally by a service provider. For example, the service provider may host a private auction in which only certain users can access the user's invitation details.

## Claims

1. A computer implemented method of offering an exchange of an entity, the method comprising:
generating a first script, the first script comprising:
a first set of metadata associated with a first invitation for the exchange of a first entity by a first user, the first set of metadata comprising an indication of the first entity to be offered for exchange and a first location condition for the exchange, the first location condition comprising location information indicative of a geographical location or area for the exchange of the first entity
a first user public key (P1A) associated with the first user, wherein the first user public key (P1A) is part of an asymmetric cryptographic pair comprising the first user public key (P1A) and a first user private key (V1A),
hashing the first script to generate a first script hash; and
publishing the first script and the first script hash on a distributed hash table (DHT);
matching the first invitation of the first script to a second script that is published on the DHT by comparing at least the first entity specified in the first script with a second entity specified in the second script;
determining whether the first location condition is fulfilled by:
if a match is found, identifying, by means of a GPS reading, a location of the first user, and
comparing the identified location with the location or area indicated by the location information comprised in the first location condition; and
in response to a determination that the first location condition is fulfilled, recording a first exchange transaction involving an exchange of the first entity, on a peer-to-peer (P2P) distributed ledger.

2. The method of claim 1, wherein the first script further comprises
a first third-party public key (P1T) associated with a first third-party, wherein the first third party public key (P1T) is part of an asymmetric cryptographic pair comprising the first third-party public key (P1T) and a first third-party private key (V1T).

3. The method claim 1 or claim 2, wherein the P2P distributed ledger is the Bitcoin block chain.

4. The method of any one of the preceding claims, wherein the first entity that is offered for exchange may be one or more of the following:
a) a cryptocurrency;
b) a contract;
c) goods;
d) services.

5. The method of claim 4, wherein the contract is for one or more of the following:
a) a fiat currency;
b) title deeds;
c) goods;
d) services.

6. The method of any one of the preceding claims, comprising:
generating a first invitation transaction for inclusion on the peer-to-peer (P2P) distributed ledger, the first invitation transaction comprising an indication of a second entity to be transferred in exchange for the first entity, and the first script hash.

7. The method of claim 6, wherein the second entity to be transferred in exchange for the first entity may be one or more of the following:
a) a cryptocurrency;
b) a contract;
c) goods;
d) services.

8. The method of any one of the preceding claims, wherein the first location condition further comprises on or more of the following:
a) location format information indicative of a format of the location information;
b) range information indicative of a range limit on the geographical location or area relating to the exchange; and
c) range format information indicative of a format of the range information.

9. The method of any one of the preceding claims comprising:
wherein the second script comprises:
a second set of metadata associated with a second invitation for an exchange of a second entity by a second user, the second set of metadata comprising an indication of the second entity to be offered in exchange for the first entity,
a second user public key (P2A) associated with the second user, wherein the second user public key (P2A) is part of an asymmetric cryptographic pair comprising the second user public key (P2A) and a second user private key (V2A), and
a second third-party public key (P2T) associated with a second third-party, wherein the second third-party public key (P2T) is part of an asymmetric cryptographic pair comprising the second third-party public key (P2T) and a second third-party private key (V2T).

10. The method of claim 9, as dependent on claim 2, further comprising at least one of:
(a) wherein determining whether the first location condition is fulfilled further comprises identifying a location of the second user; and/or
(b) wherein the second third party is the same as the first third party.

11. The method of claim 9 or 10, further comprising:
publishing the second script on the DHT, comprising:
generating the second script;
hashing the second script to generate a second script hash; and
publishing the second script and the second script hash on the DHT.

12. The method of claim 11, further comprising:
generating a second invitation transaction for inclusion on the P2P distributed ledger, the second invitation transaction comprising an indication of the first entity to be transferred in exchange for the second entity; and the second script hash.

13. The method of any one of claims 9 to 12, as dependent on claim 6, as dependent on claim 2, further comprising:
generating the first exchange transaction for inclusion on the P2P distributed ledger, the first exchange transaction comprising:
the first script,
the first user public key (P1A),
the first third-party public key (P17),
a first input provided from an output of the first invitation transaction, and
a first output indicating a first quantity of the first entity to be transferred to the second user.

14. The method of claim 13 as dependent on claim 12, the first exchange transaction further comprising:
the second script,
the second user public key (P2A),
the second third-party public key (P2T)
a second input provided from an output of the second invitation transaction, and
a second output indicating a second quantity of a second entity to be transferred to the first user.

15. The method of claim 13 as dependent on claim 12, further comprising:
generating a second exchange transaction for inclusion on the P2P distributed ledger, the second exchange transaction comprising:
the second script,
the second user public key (P2A),
the second third-party public key (P2T),
a second input provided from an output of the second invitation transaction, and
a second output indicating a second quantity of a second entity to be transferred to the first user; and
recording the second exchange transaction on the P2P distributed ledger.

16. The method of claim 15, as dependent on claim 2, further comprising at least one of:
(a) wherein generating the first exchange transaction comprises:
facilitating signing of the first script with the first user private key (V1A); and
facilitating signing of the first script with the first third-party private key (P1T);
(b) wherein generating the second exchange transaction comprises:
facilitating signing of the second script with the second user private key (V2A); and
facilitating signing of the second script the second third-party private key (P2T);
(c) facilitating one or more of the first and second users to accept the exchange before generating or recording the first and/or second exchange transactions; and/or
(d) wherein one or more of the first exchange transaction, and the second exchange transaction is a pay-to-script-hash (P2SH) transaction.

17. The method of any preceding claim, further comprising at least one of the following features:
(a) wherein the first and/or second set of metadata is be provided in a redeem script, and/ or
(b) wherein the first and/or second set of metadata is provided in the script at a location which is designated in a blockchain protocol as a location for a cryptographic key.

18. A computer system for offering an exchange of an entity, the computer system comprising:
a first processing device configured to:
generate a first script comprising:
a first set of metadata associated with a first invitation for the exchange of a first entity by a first user, the first set of metadata comprising an indication of the first entity to be offered for exchange and a first location condition for the exchange the first location condition comprising location information indicative of a geographical location or area for the exchange of the first entity,
a first user public key (PIA) associated with the first user, wherein the first user public key (PIA) is part of an asymmetric cryptographic pair comprising the first user public key (PIA) and a first user private key (VIA)
hash the first script to generate a first script hash;
publish the first script and the first script hash on a distributed hash table (DHT);
match the first invitation of the first script to a second script that is published on the DHT by comparing at least the first entity specified in the first script with a second entity specified in the second script;
determine whether the first location condition is fulfilled by:
if a match is found, identifying, by means of a GPS reading, a location of the first user, and
comparing the identified location with the location or area indicated by the location information comprised in the first location condition; and
in response to a determination that the first location condition is fulfilled, recording a first exchange transaction involving an exchange of the first entity, on a peer-to-peer (P2P) distributed ledger.

19. A processor or group of processors operable to perform the method of any of claims 1 to 17.

## Patentansprüche

1. Computerimplementiertes Verfahren zum Anbieten eines Austauschs einer Entität, wobei das Verfahren umfasst:
Erzeugen eines ersten Skripts, wobei das erste Skript umfasst:
einen ersten Satz von Metadaten, die einer ersten Einladung zum Austausch einer ersten Entität durch einen ersten Benutzer zugeordnet sind, wobei der erste Satz von Metadaten eine Angabe der ersten Entität, die zum Austausch angeboten werden soll, und eine erste Standortbedingung für den Austausch umfasst, wobei die erste Standortbedingung Informationen zu einem geografischen Standort oder Bereich für den Austausch der ersten Entität umfasst,
einen öffentlichen Schlüssel (P1A) des ersten Benutzers, der dem ersten Benutzer zugeordnet ist, wobei der öffentliche Schlüssel des ersten Benutzers (P1A) Teil eines asymmetrischen kryptografischen Schlüsselspaares ist, das den öffentlichen Schlüssel des ersten Benutzers (P1A) und einen privaten Schlüssel des ersten Benutzers (V1A) umfasst,
Erstellen eines Hashwerts des ersten Skripts, um einen ersten Skript-Hash zu erzeugen; und
Veröffentlichen des ersten Skripts und des ersten Skript-Hashs in einer verteilten Hash-Tabelle (Distributed Hash Table, DHT);
Abgleichen der ersten Einladung des ersten Skripts mit einem zweiten Skript, das in der DHT veröffentlicht ist, durch Vergleichen mindestens der im ersten Skript angegebenen ersten Entität mit einer im zweiten Skript angegebenen zweiten Entität;
Bestimmen, ob die erste Standortbedingung erfüllt ist, durch:
falls eine Übereinstimmung gefunden wird, Identifizieren eines Standorts des ersten Benutzers mittels eines GPS-Messwerts und
Vergleichen des identifizierten Standorts mit dem Standort oder dem Gebiet, das von den in der ersten Standortbedingung enthaltenen Informationen angegeben ist; und
als Reaktion auf die Bestimmung, dass die erste Standortbedingung erfüllt ist, Aufzeichnen einer ersten Austausch-Transaktion, die einen Austausch der ersten Entität umfasst, in einem verteilten Peer-to-Peer- (P2P) Ledger.

2. Verfahren nach Anspruch 1, wobei das erste Skript ferner umfasst:
einen öffentlichen Schlüssel eines ersten Dritten (P1T), der einem ersten Dritten zugeordnet ist, wobei der öffentliche Schlüssel eines ersten Dritten (P1T) Teil eines asymmetrischen kryptografischen Schlüsselspaares ist, das den öffentlichen Schlüssel eines ersten Dritten (P1T) und einen privaten Schlüssel eines ersten Dritten (V1T) umfasst.

3. Verfahren nach Anspruch 1 oder Anspruch 2, wobei das verteilte P2P-Ledger die Bitcoin-Blockchain ist.

4. Verfahren nach einem der vorhergehenden Ansprüche, wobei die erste Entität, die zum Austausch angeboten wird, eines oder mehrere der Folgenden sein kann:
a) eine Kryptowährung;
b) ein Vertrag;
c) Waren;
d) Dienstleistungen.

5. Verfahren nach Anspruch 4, wobei der Vertrag eines oder mehrere der Folgenden betrifft:
a) eine Fiat-Währung;
b) Eigentumsurkunden;
c) Waren;
d) Dienstleistungen.

6. Verfahren nach einem der vorhergehenden Ansprüche, das umfasst:
Erzeugen einer ersten Einladungstransaktion zur Aufnahme in das verteilte Peer-to-Peer- (P2P) Ledger, wobei die erste Einladungstransaktion eine Angabe einer zweiten Entität, die im Austausch für die erste Entität übertragen werden soll, und den ersten Skript-Hash umfasst.

7. Verfahren nach Anspruch 6, wobei die zweite Entität, die im Austausch gegen die erste Entität übertragen werden soll, eines oder mehrere der Folgenden sein kann:
a) eine Kryptowährung;
b) ein Vertrag;
c) Waren;
d) Dienstleistungen.

8. Verfahren nach einem der vorhergehenden Ansprüche, wobei die erste Standortbedingung ferner eine oder mehrere der folgenden Informationen umfasst:
a) Standortformatinformationen, die ein Format der Standortinformationen angeben;
b) Bereichsinformationen, die eine Bereichsgrenze des geografischen Standorts oder Gebiets im Zusammenhang mit dem Austausch angeben; und
c) Bereichsformatinformationen, die ein Format der Bereichsinformationen angeben.

9. Verfahren nach einem der vorhergehenden Ansprüche, das umfasst:
wobei das zweite Skript umfasst:
einen zweiten Satz von Metadaten, der einer zweiten Einladung zum Austausch einer zweiten Entität durch einen zweiten Benutzer zugeordnet ist, wobei der zweite Satz von Metadaten eine Angabe der zweiten Entität umfasst, die im Austausch gegen die erste Entität angeboten werden soll,
einen öffentlichen Schlüssel (P2A) des zweiten Benutzers, der dem zweiten Benutzer zugeordnet ist, wobei der öffentliche Schlüssel des zweiten Benutzers (P2A) Teil eines asymmetrischen kryptografischen Schlüsselspaares ist, das den öffentlichen Schlüssel des zweiten Benutzers (P2A) und einen privaten Schlüssel des zweiten Benutzers (V2A) umfasst, und
einen öffentlichen Schlüssel eines zweiten Dritten (P2T), der einem zweiten Dritten zugeordnet ist, wobei der öffentliche Schlüssel eines zweiten Dritten (P2T) Teil eines asymmetrischen kryptografischen Schlüsselspaares ist, das den öffentlichen Schlüssel eines zweiten Dritten (P2T) und einen privaten Schlüssel eines zweiten Dritten (V2T) umfasst.

10. Verfahren nach Anspruch 9, abhängig von Anspruch 2, das ferner mindestens eines der Folgenden umfasst:
(a) wobei das Bestimmen, ob die erste Standortbedingung erfüllt ist, ferner das Identifizieren eines Standorts des zweiten Benutzers umfasst; und/oder
(b) wobei der zweite Dritte mit dem ersten Dritten identisch ist.

11. Verfahren nach Anspruch 9 oder 10, das ferner umfasst:
Veröffentlichen des zweiten Skripts in der DHT, umfassend:
Erzeugen des zweiten Skripts;
Erstellen eines Hashwerts des zweiten Skripts, um einen zweiten Skript-Hash zu erzeugen; und
Veröffentlichen des zweiten Skripts und des zweiten Skript-Hashs in der DHT.

12. Verfahren nach Anspruch 11, das ferner umfasst:
Erzeugen einer zweiten Einladungstransaktion zur Aufnahme in das verteilte P2P-Ledger, wobei die zweite Einladungstransaktion eine Angabe einer zweiten Entität, die im Austausch für die zweite Entität übertragen werden soll; und den zweiten Skript-Hash umfasst.

13. Verfahren nach einem der Ansprüche 9 bis 12, abhängig von Anspruch 6, abhängig von Anspruch 2, das ferner umfasst:
Erzeugen der ersten Austausch-Transaktion zur Aufnahme in das verteilte P2P-Ledger, wobei die erste Austausch-Transaktion umfasst:
das erste Skript,
den öffentlichen Schlüssel eines ersten Benutzers (P1A),
den öffentlichen Schlüssel eines ersten Dritten (P1T),
eine erste Eingabe, die aus einer Ausgabe der ersten Einladungs-Transaktion bereitgestellt wird, und
eine erste Ausgabe, die eine erste Menge der ersten Entität angibt, die an den zweiten Benutzer übertragen werden soll.

14. Verfahren nach Anspruch 13, abhängig von Anspruch 12, wobei die erste Austausch-Transaktion ferner umfasst:
das zweite Skript,
den öffentlichen Schlüssel des zweiten Benutzers (P2A),
den öffentlichen Schlüssel des zweiten Dritten (P2T),
eine zweite Eingabe, die aus einer Ausgabe der zweiten Einladungs-Transaktion bereitgestellt wird, und
eine zweite Ausgabe, die eine zweite Menge einer zweiten Entität angibt, die an den ersten Benutzer übertragen werden soll.

15. Verfahren nach Anspruch 13, abhängig von Anspruch 12, das ferner umfasst:
Erzeugen einer zweiten Austausch-Transaktion zur Aufnahme in das verteilte P2P-Ledger, wobei die zweite Austausch-Transaktion umfasst:
das zweite Skript,
den öffentlichen Schlüssel des zweiten Benutzers (P2A),
den öffentlichen Schlüssel des zweiten Dritten (P2T),
eine zweite Eingabe, die aus einer Ausgabe der zweiten Einladungs-Transaktion bereitgestellt wird, und
eine zweite Ausgabe, die eine zweite Menge einer zweiten Entität angibt, die an den ersten Benutzer übertragen werden soll; und
Aufzeichnen der zweiten Austausch-Transaktion im verteilten P2P-Ledger.

16. Verfahren nach Anspruch 15, abhängig von Anspruch 2, das ferner mindestens eines der Folgenden umfasst:
(a) wobei das Erzeugen der ersten Austausch-Transaktion umfasst:
Ermöglichen der Signierung des ersten Skripts mit dem privaten Schlüssel des ersten Benutzers (V1A); und
Ermöglichen der Signierung des ersten Skripts mit dem privaten Schlüssel des ersten Dritten (P1T);
(b) wobei das Erzeugen der zweiten Austausch-Transaktion umfasst:
Ermöglichen der Signierung des zweiten Skripts mit dem privaten Schlüssel des zweiten Benutzers; und
Ermöglichen der Signierung des zweiten Skripts mit dem privaten Schlüssel des zweiten Dritten (P2T);
(c) Ermöglichen, dass einer oder mehrere der ersten und zweiten Benutzer den Austausch akzeptieren, bevor die erste und/oder zweite Austausch-Transaktion erzeugt oder aufgezeichnet wird; und/oder
(d) wobei eine oder mehrere der ersten und zweiten Austausch-Transaktionen eine "Pay-to-Script-Hash" (P2SH)-Transaktion ist.

17. Verfahren nach einem der vorhergehenden Ansprüche, das ferner mindestens eines der folgenden Merkmale umfasst:
(a) wobei der erste und/oder zweite Satz von Metadaten in einem Einlöseskript bereitgestellt wird, und/oder
(b) wobei der erste und/oder zweite Satz von Metadaten in dem Skript an einer Stelle bereitgestellt wird, die in einem Blockchain-Protokoll als Speicherort für einen kryptografischen Schlüssel festgelegt ist.

18. Computersystem zum Anbieten eines Austauschs einer Entität, wobei das Computersystem umfasst:
eine erste Verarbeitungsvorrichtung, die für Folgendes konfiguriert ist:
Erzeugen eines ersten Skripts, das umfasst:
einen ersten Satz von Metadaten, die einer ersten Einladung zum Austausch einer ersten Entität durch einen ersten Benutzer zugeordnet sind, wobei der erste Satz von Metadaten eine Angabe der ersten Entität, die zum Austausch angeboten werden soll, und eine erste Standortbedingung für den Austausch umfasst, wobei die erste Standortbedingung Informationen zu einem geografischen Standort oder Bereich für den Austausch der ersten Entität umfasst,
einen ersten öffentlichen Schlüssel (P1A) des Benutzers, der dem ersten Benutzer zugeordnet ist, wobei der öffentliche Schlüssel des ersten Benutzers (P1A) Teil eines asymmetrischen kryptografischen Schlüsselspaares ist, das den öffentlichen Schlüssel des ersten Benutzers (P1A) und einen privaten Schlüssel des ersten Benutzers (V1A) umfasst, um das erste Skript zu hashen, um einen ersten Skript-Hash zu erzeugen;
Veröffentlichen des ersten Skripts und des ersten Skript-Hashs in einer verteilten Hash-Tabelle (DHT);
Abgleichen der ersten Einladung des ersten Skripts mit einem zweiten Skript, das in der DHT veröffentlicht ist, durch Vergleichen mindestens der im ersten Skript angegebenen ersten Entität mit einer im zweiten Skript angegebenen zweiten Entität;
Bestimmen, ob die erste Standortbedingung erfüllt ist, durch:
falls eine Übereinstimmung gefunden wird, Identifizieren eines Standorts des ersten Benutzers mittels eines GPS-Messwerts und
Vergleichen des identifizierten Standorts mit dem Standort oder dem Gebiet, das von den in der ersten Standortbedingung enthaltenen Informationen angegeben ist; und
als Reaktion auf das Bestimmen, dass die erste Standortbedingung erfüllt ist,
Aufzeichnen einer ersten Austausch-Transaktion, die einen Austausch der ersten Entität umfasst, in einem verteilten Peer-to-Peer- (P2P) Ledger.

19. Prozessor oder Gruppe von Prozessoren, die das Verfahren nach einem der Ansprüche 1 bis 17 durchführen können.

## Revendications

1. Procédé mis en œuvre par ordinateur offrant un échange d'une entité, le procédé comportant les étapes consistant à :
générer un premier script, le premier script comportant :
un premier ensemble de métadonnées associées à une première invitation d'échange d'une première entité par un premier utilisateur, le premier ensemble de métadonnées comportant une indication de la première entité destinée à être offerte pour l'échange et une première condition d'emplacement pour l'échange, la première condition d'emplacement comportant des informations d'emplacement indiquant un emplacement géographique ou une zone pour l'échange de la première entité,
une première clé publique d'utilisateur (P1A) associée au premier utilisateur, dans lequel la première clé publique d'utilisateur (P1A) fait partie d'une paire cryptographique asymétrique comportant la première clé publique d'utilisateur (P1A) et une première clé privée d'utilisateur (V1A),
hacher le premier script afin de générer un hachage du premier script ; et
publier le premier script et le hachage du premier script sur une table de hachage distribuée (DHT) ;
faire correspondre la première invitation du premier script à un deuxième script qui est publié sur la table DHT en comparant au moins la première entité spécifiée dans le premier script avec une deuxième entité spécifiée dans le deuxième script ;
déterminer si la première condition d'emplacement est remplie par les étapes consistant à :
si une correspondance est trouvée, identifier, au moyen d'une lecture GPS, un emplacement du premier utilisateur, et
comparer l'emplacement identifié avec l'emplacement, ou la zone, qui est indiqué par les informations d'emplacement comprises dans la première condition d'emplacement ; et
en réponse à une détermination comme quoi la première condition d'emplacement est remplie, enregistrer une première transaction d'échange impliquant un échange de la première entité, sur un registre distribué poste à poste (P2P).

2. Procédé selon la revendication 1, dans lequel le premier script comporte par ailleurs une première clé publique de tierce partie (P1T) associée à une première tierce partie, dans lequel la première clé publique de tierce partie (P1T) fait partie d'une paire cryptographique asymétrique comportant la première clé publique de tierce partie (P1T) et une première clé privée de tierce partie (V1T).

3. Procédé selon la revendication 1 ou la revendication 2, dans lequel le registre distribué P2P est la chaîne de blocs de bitcoins.

4. Procédé selon l'une quelconque des revendications précédentes, dans lequel la première entité qui est proposée pour l'échange peut être une ou plusieurs parmi les entités suivantes :
a) une cryptomonnaie ;
b) un contrat ;
c) des marchandises ;
d) des services.

5. Procédé selon la revendication 4, dans lequel le contrat est pour un ou plusieurs parmi les éléments suivants :
a) une monnaie fiduciaire ;
b) des titres de propriété ;
c) des marchandises ;
d) des services.

6. Procédé selon l'une quelconque des revendications précédentes, comportant l'étape consistant à :
générer une première transaction d'invitation à des fins d'inclusion dans le registre distribué poste à poste (P2P), la première transaction d'invitation comportant une indication d'une deuxième entité destinée à être transférée en échange de la première entité, et le hachage du premier script.

7. Procédé selon la revendication 6, dans lequel la deuxième entité destinée à être transférée en échange de la première entité peut être une ou plusieurs parmi les entités suivantes :
a) une cryptomonnaie ;
b) un contrat ;
c) des marchandises ;
d) des services.

8. Procédé selon l'une quelconque des revendications précédentes, dans lequel la première condition d'emplacement comporte par ailleurs une ou plusieurs parmi les informations suivantes :
a) des informations de format d'emplacement indiquant un format des informations d'emplacement ;
b) des informations de rayon indiquant une limite de rayon concernant l'emplacement géographique, ou la zone, se rapportant à l'échange ; et
c) des informations de format de rayon indiquant un format des informations de rayon.

9. Procédé selon l'une quelconque des revendications précédentes :
dans lequel le deuxième script comporte :
un deuxième ensemble de métadonnées associées à une deuxième invitation d'échange d'une deuxième entité par un deuxième utilisateur, le deuxième ensemble de métadonnées comportant une indication de la deuxième entité destinée à être offerte en échange de la première entité,
une deuxième clé publique d'utilisateur (P2A) associée au deuxième utilisateur, dans lequel la deuxième clé publique d'utilisateur (P2A) fait partie d'une paire cryptographique asymétrique comportant la deuxième clé publique d'utilisateur (P2A) et une deuxième clé privée d'utilisateur (V2A), et
une deuxième clé publique de tierce partie (P2T) associée à une deuxième tierce partie, dans lequel la deuxième clé publique de tierce partie (P2T) fait partie d'une paire cryptographique asymétrique comportant la deuxième clé publique de tierce partie (P2T) et une deuxième clé privée de tierce partie (V2T).

10. Procédé selon la revendication 9, quand elle dépend de la revendication 2, comportant par ailleurs au moins l'un parmi :
(a) l'étape consistant à déterminer si la première condition d'emplacement est remplie comporte par ailleurs l'étape consistant à identifier un emplacement du deuxième utilisateur ; et/ou
(b) la deuxième tierce partie est la même que la première tierce partie.

11. Procédé selon la revendication 9 ou la revendication 10, comportant par ailleurs l'étape consistant à :
publier le deuxième script sur la table DHT, comportant les étapes consistant à :
générer le deuxième script ;
hacher le deuxième script afin de générer un hachage du deuxième script ; et
publier le deuxième script et le hachage du deuxième script sur la table DHT.

12. Procédé selon la revendication 11, comportant par ailleurs l'étape consistant à :
générer une deuxième transaction d'invitation à des fins d'inclusion dans le registre distribué P2P, la deuxième transaction d'invitation comportant une indication de la première entité destinée à être transférée en échange de la deuxième entité ; et le hachage du deuxième script.

13. Procédé selon l'une quelconque des revendications 9 à 12, quand elles dépendent de la revendication 6, quand elles dépendent de la revendication 2, comportant par ailleurs l'étape consistant à :
générer la première transaction d'échange à des fins d'inclusion dans le registre distribué P2P, la première transaction d'échange comportant :
le premier script,
la première clé publique d'utilisateur (P1A),
la première clé publique de tierce partie (P1T),
une première entrée fournie à partir d'une sortie de la première transaction d'invitation, et
une première sortie indiquant une première quantité de la première entité destinée à être transférée au deuxième utilisateur.

14. Procédé selon la revendication 13 quand elle dépend de la revendication 12, la première transaction d'échange comportant par ailleurs :
le deuxième script,
la deuxième clé publique d'utilisateur (P2A),
la deuxième clé publique de tierce partie (P2T),
une deuxième entrée fournie à partir d'une sortie de la deuxième transaction d'invitation, et
une deuxième sortie indiquant une deuxième quantité d'une deuxième entité destinée à être transférée au premier utilisateur.

15. Procédé selon la revendication 13 quand elle dépend de la revendication 12, comportant par ailleurs les étapes consistant à :
générer une deuxième transaction d'échange à des fins d'inclusion dans le registre distribué P2P, la deuxième transaction d'échange comportant :
le deuxième script,
la deuxième clé publique d'utilisateur (P2A),
la deuxième clé publique de tierce partie (P2T),
une deuxième entrée fournie à partir d'une sortie de la deuxième transaction d'invitation, et
une deuxième sortie indiquant une deuxième quantité d'une deuxième entité destinée à être transférée au premier utilisateur ; et
enregistrer la deuxième transaction d'échange sur le grand registre distribué P2P.

16. Procédé selon la revendication 15, quand elle dépend de la revendication 2, comportant par ailleurs au moins l'un parmi :
(a) l'étape consistant à générer la première transaction d'échange comporte les étapes consistant à :
faciliter la signature du premier script avec la première clé privée d'utilisateur (V1A) ; et
faciliter la signature du premier script avec la première clé privée de tierce partie (P1T) ;
(b) l'étape consistant à générer la deuxième transaction d'échange comporte les étapes consistant à :
faciliter la signature du deuxième script avec la deuxième clé privée d'utilisateur (V2A) ; et
faciliter la signature du deuxième script avec la deuxième clé privée de tierce partie (P2T) ;
(c) faciliter l'acceptation de l'échange par un ou plusieurs parmi les premier et deuxième utilisateurs avant de générer ou d'enregistrer les première et/ou deuxième transactions d'échange ; et/ou
(d) une ou plusieurs parmi la première transaction d'échange et la deuxième transaction d'échange sont une transaction de paiement par hachage de script (P2SH).

17. Procédé selon l'une quelconque des revendications précédentes, comportant par ailleurs au moins l'une des caractéristiques suivantes :
(a) le premier et/ou le deuxième ensemble de métadonnées est fourni dans un script de rachat, et/ou
(b) le premier et/ou le deuxième ensemble de métadonnées est fourni dans le script au niveau d'un emplacement qui est désigné dans un protocole de chaîne de blocs comme emplacement pour une clé cryptographique.

18. Système informatique offrant un échange d'une entité, le système informatique comportant :
un premier dispositif de traitement configuré pour :
générer un premier script comportant :
un premier ensemble de métadonnées associées à une première invitation d'échange d'une première entité par un premier utilisateur, le premier ensemble de métadonnées comportant une indication de la première entité destinée à être offerte pour l'échange et une première condition d'emplacement pour l'échange, la première condition d'emplacement comportant des informations d'emplacement indiquant un emplacement géographique ou une zone pour l'échange de la première entité,
une première clé publique d'utilisateur (P1A) associée au premier utilisateur, dans lequel la première clé publique d'utilisateur (P1A) fait partie d'une paire cryptographique asymétrique comportant la première clé publique d'utilisateur (P1A) et une première clé privée d'utilisateur (V1A),
hacher le premier script afin de générer un hachage du premier script ;
publier le premier script et le hachage du premier script sur une table de hachage distribuée (DHT) ;
faire correspondre la première invitation du premier script à un deuxième script qui est publié sur la table DHT en comparant au moins la première entité spécifiée dans le premier script avec une deuxième entité spécifiée dans le deuxième script ;
déterminer si la première condition d'emplacement est remplie par les étapes consistant à :
si une correspondance est trouvée, identifier, au moyen d'une lecture GPS, un emplacement du premier utilisateur, et
comparer l'emplacement identifié avec l'emplacement, ou la zone, qui est indiqué par les informations d'emplacement comprises dans la première condition d'emplacement ; et
en réponse à une détermination comme quoi la première condition d'emplacement est remplie,
enregistrer une première transaction d'échange impliquant un échange de la première entité, sur un registre distribué poste à poste (P2P).

19. Processeur ou groupe de processeurs en mesure être mis en œuvre pour effectuer le procédé selon l'une quelconque des revendications 1 à 17.
